(19) Europäisches Patentamt
European Patent Office
Office européen des brevets

(11) **EP 4 593 382 A1**

(12) **EUROPEAN PATENT APPLICATION**
published in accordance with Art. 153(4) EPC

(43) Date of publication:
**30.07.2025 Bulletin 2025/31**

(51) International Patent Classification (IPC):
***H04N 19/176*** ***(2014.01)***

(21) Application number: **23867344.6**

(22) Date of filing: **12.09.2023**

(86) International application number:
**PCT/CN2023/118293**

(87) International publication number:
**WO 2024/061055 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.09.2022 CN 202211146464**

(71) Applicant: **Hangzhou Hikvision Digital Technology Co., Ltd.**
**Hangzhou, Zhejiang 310051 (CN)**

(72) Inventors:
• WANG, Yan
 Hangzhou, Zhejiang 310051 (CN)
• PAN, Dongping
 Hangzhou, Zhejiang 310051 (CN)
• SUN, Yucheng
 Hangzhou, Zhejiang 310051 (CN)
• CHEN, Fangdong
 Hangzhou, Zhejiang 310051 (CN)

(74) Representative: **Yang, Shu**
**Withers & Rogers LLP**
**2 London Bridge**
**London SE1 9RA (GB)**

(54) **IMAGE CODING METHOD AND APPARATUS, IMAGE DECODING METHOD AND APPARATUS, AND STORAGE MEDIUM**

(57)    Provided in the present application are an image encoding method and apparatus, an image decoding method and apparatus and a storage medium. The encoding method comprises: acquiring an encoding unit, wherein the encoding unit is an image block in an image to be processed, and comprises encoding blocks of a plurality channels, the plurality channels comprise a first channel, and the first channel is any one of the plurality channels; and encoding the encoding block of the first channel according to a first encoding mode. The method is suitable for image encoding and decoding processes, and is used for solving the problem of substream buffers being set to be excessively large.

Fig.11

**Description**

**Related applications**

The present application claims the priority to a Chinese patent application No. 202211146464.4 filed on September 20, 2022, which is incorporated herein by reference in its entirety.

**Technical Field**

The present application relates to the field of video encoding and decoding, particularly to an image encoding method and apparatus, an image decoding method and apparatus, and a storage medium.

**Background**

In order to improve the performance of an encoder, a technique called substream parallel is proposed.

The substream parallel means encoding syntax elements from different channels by using multiple entropy encoders to obtain multiple substreams, filling the multiple substreams into their respective substream buffers, and interweaving the substreams in the substream buffers into a bit stream (it can also be referred to as a code stream) according to a preset interweaving rules.

However, considering the dependencies among substreams, a speed of filling substreams into different substream buffers varies, and substream bits filled into a substream buffer with a faster filling speed is more than that filled into a substream buffer with a slower filling speed within a same time period. In order to ensure the integrity of the filled data, all substream buffers need to be set larger, which increases hardware costs.

**Summary**

Based on the above technical issues, the present application provides an image encoding method and an image decoding method, an apparatus, a device, and a storage medium, which can encode through various improved encoding and decoding modes, reasonably configure spaces of substream buffers, and reduce hardware costs.

In a first aspect, the present application provides an image encoding method, including:

acquiring an encoding unit, wherein the encoding unit includes encoding blocks of multiple channels;

encoding preset codewords in a target substream that meets a preset condition until the target substream no longer meets the preset condition, wherein the target substream is a substream among multiple substreams, and the multiple substreams are a code stream obtained by encoding of the encoding blocks of the multiple channels.

In the second aspect, the present application provides an image encoding method, including:

acquiring an encoding unit, wherein the encoding unit includes encoding blocks of multiple channels;

encoding an encoding block of each channel in the multiple channels based on a preset expansion rate, to cause a current expansion rate to be less than or equal to the preset expansion rate,

wherein the preset expansion rate includes a first preset expansion rate; a value of the current expansion rate is derived from a quotient of the number of bits of a maximum substream and the number of bits of a minimum substream; the maximum substream is a substream with the largest number of bits among multiple substreams obtained by encoding of the encoding blocks of the multiple channels; the minimum substream is a substream with the smallest number of bits among the multiple substreams obtained by encoding of the encoding blocks of the multiple channels.

In the third aspect, the present application provides an image encoding method, including:

acquiring an encoding unit, wherein the encoding unit includes encoding blocks of multiple channels;

encoding an encoding block of at least one channel in the multiple channels in an intra block copy IBC mode;

acquiring block vectors BVs of reference prediction blocks, wherein the BVs of the reference prediction blocks are used to indicate position of the reference prediction blocks in an encoded image block; the reference prediction blocks are used to characterize a prediction value of the encoding block encoded in the IBC mode;

encoding the BVs of the reference prediction blocks in at least one substream obtained by encoding of an encoding block of at least one of the multiple channels in the IBC mode.

In the fourth aspect, the present application provides an image encoding method, including:

acquiring an encoding unit, wherein the encoding unit is an image block in an image to be processed, and the encoding unit includes encoding blocks of multiple channels;

determining a first total code length, wherein the first total code length is a total code length of a first code stream obtained by encoding of each of the encoding blocks of the multiple channels in a target encoding mode corresponding to the encoding block; the target encoding mode includes a first encoding mode; the first encoding mode is a mode in which sample values in the encoding block are encoded according to a first fixed-length code; a code length of the first fixed-length code is less than or equal to an image bit width of the image to be processed; the image bit width is used to characterize the number of bits required to store each sample in the image to be processed;

when the first total code length is greater than or equal to a remaining size of a code stream buffer, encoding the encoding blocks of the multiple channels in a fallback mode, wherein a mode flag of the fallback mode is same as that of the first encoding mode.

In the fifth aspect, the present application provides an image decoding method, including:

parsing a code stream obtained after an encoding unit is encoded, wherein the encoding unit includes encoding blocks of multiple channels;

determining the number of codewords, wherein the number of codewords is used to indicate the number of preset codewords encoded in a target substream that meets a preset condition, and the preset codewords are encoded into the target substream when there is the target substream that meets the preset condition; decoding the code stream based on the number of codewords.

In the sixth aspect, the present application provides an image decoding method, including:

parsing a code stream obtained after an encoding unit is encoded, wherein the encoding unit includes encoding blocks of multiple channels;

determining a current expansion rate;

determining the number of codewords based on the current expansion rate and a first preset expansion rate, wherein the number of codewords is used to indicate the number of preset codewords encoded in a target substream that meets a preset condition; the preset codewords are encoded into the target substream when there is the target substream that meets the preset condition;

decoding the code stream based on the number of codewords.

In the seventh aspect, the present application provides an image decoding method, including:

parsing a code stream obtained after an encoding unit is encoded, wherein the encoding unit includes encoding blocks of multiple channels; the code stream includes multiple substreams obtained after the encoding blocks of the multiple channels are encoded, and the multiple substreams correspond one-to-one with the multiple channels;

based on block vectors BVs of reference prediction blocks parsed from at least one of the multiple substreams, determining positions of the reference prediction blocks from the multiple substreams, wherein the reference prediction blocks are used to characterize a prediction value of a decoding block decoded in an intra block copy IBC mode; the BVs of the reference prediction blocks are used to indicate positions of the reference prediction blocks in a reconstructed image block;

determining the prediction value of the decoding block decoded in the IBC mode based on information about the positions of the reference prediction blocks;

reconstructing the decoding block decoded in the IBC mode based on the prediction value.

In the eighth aspect, the present application provides an image decoding method, including:

parsing a code stream obtained after an encoding unit is encoded, wherein the encoding unit includes encoding blocks of multiple channels;

if a mode flag is parsed from substreams obtained by encoding of the encoding blocks of the multiple channels and a second total code length is greater than a remaining size of a code stream buffer, then determining that a target decoding mode for the substreams is a fallback mode, wherein the mode flag is used to indicate whether the decoding blocks of the multiple channels are decoded in the fallback mode; the second total code length is a total code length of the code stream obtained by encoding of all of the encoding blocks of the multiple channels in a first encoding mode; the first encoding mode is a mode in which sample values in an encoding block are encoded according to a first fixed-length code; a code length of the first fixed-length code is less than or equal to an image bit width of an image to be processed; the image bit width is used to characterize the number of bits required to encode and store each sample in the image to be processed;

parsing a preset flag bit in the substreams, and determining a target fallback mode, wherein the target fallback mode is a type of fallback mode; the preset flag bit is used to indicate a type of the fallback mode used for encoding of the encoding blocks of the multiple channels; the fallback mode includes a first fallback mode and a second fallback mode;

decoding the substreams in the target fallback mode.

In the ninth aspect, the present application provides an image decoding method, including:

acquiring a code stream obtained after an encoding unit is encoded;

decoding a substream corresponding to a first channel in a first decoding mode.

In the tenth aspect, the present application provides an image decoding method, including:

acquiring a decoding unit, wherein the decoding unit is an image block in an image to be processed, and the decoding unit includes decoding blocks of multiple channels;

determining a first total code length, wherein the first total code length is a total code length of a first code stream obtained by decoding of each of the decoding blocks of the multiple channels in a target decoding mode corresponding to the decoding block;

decoding the decoding blocks of the multiple channels in a fallback mode when the first total code length is greater than or equal to a remaining size of a code stream buffer.

In the eleventh aspect, the present application provides an image decoding method, including:

acquiring a decoding unit, wherein the decoding unit includes decoding blocks of multiple channels;

decoding a decoding block of at least one of the multiple channels in the IBC mode;

acquiring BVs of reference prediction blocks;

decoding the BVs of the reference prediction blocks from at least one substream obtained by encoding of the decoding block of the at least one channel in the IBC mode.

In the twelfth aspect, the present application provides an image encoding apparatus, including:

an acquiring module, configured for acquiring an encoding unit, wherein the encoding unit includes encoding blocks of multiple channels;

a processing module, configured for encoding preset codewords in a target substream that meets a preset condition until the target substream no longer meets the preset condition, wherein the target substream is a substream among multiple substreams; the multiple substreams are a code stream obtained by encoding of the encoding blocks of the multiple channels.

In the thirteenth aspect, the present application provides an image encoding apparatus, including:

an acquiring module, configured for acquiring an encoding unit, wherein the encoding unit includes encoding blocks of multiple channels;

a processing module, configured for encoding an encoding block of each channel based on a preset expansion rate, to cause a current expansion rate to be less than or equal to the preset expansion rate.

In the fourteenth aspect, the present application provides an image encoding apparatus, including:

an acquiring module, configured for acquiring an encoding unit, wherein the encoding unit includes encoding blocks of multiple channels;

a processing module, configured for encoding an encoding block of at least one channel in the multiple channels in an intra block copy IBC mode; acquiring block vectors BVs of reference prediction blocks, wherein the BVs of the reference prediction blocks are used to indicate positions of the reference prediction blocks in an encoded image block, and the reference prediction blocks are used to characterize a prediction value of the encoding block encoded in the IBC mode; encoding the BVs of the reference prediction blocks in at least one substream obtained by encoding of the encoding block of the at least one channel in the IBC mode.

In the fifteenth aspect, the present application provides an image encoding apparatus, including:

an acquiring module, configured for acquiring an encoding unit, wherein the encoding unit is an image block in an image to be processed; the encoding unit includes encoding blocks of multiple channels;

a processing module, configured for determining a first total code length, wherein the first total code length is a total code length of a first code stream obtained by encoding of each of the encoding blocks of the multiple channels in a target encoding mode corresponding to the encoding block; the target encoding mode includes a first encoding mode; the first encoding mode is a mode in which sample values in the encoding block according to a first fixed-length code; a code length of the first fixed-length code is less than or equal to an image bit width of the image to be processed; the image bit width is used to characterize the number of bits required to store each sample in the image to be processed; encoding the encoding blocks of the multiple channels in a fallback mode when the first total code length is greater than or equal to a remaining size of a code stream buffer, wherein a mode flag of the fallback mode is same as that of the first encoding mode.

In the sixteenth aspect, the present application provides an image decoding apparatus, including:
a processing module, configured for parsing a code stream obtained after an encoding unit is encoded, wherein the encoding unit includes encoding blocks of multiple channels; determining the number of codewords, wherein the number of codewords is used to indicate the number of preset codewords encoded in a target substream that meets a preset condition, and the preset codewords are encoded into the target substream when there is the target substream that meets the preset condition; decoding the code stream based on the number of codewords.
In the seventeenth aspect, the present application provides an image decoding apparatus, including:
a processing module, configured for parsing a code stream obtained after an encoding unit is encoded, wherein the encoding unit includes encoding blocks of multiple channels; determining a current expansion rate; determining the number of codewords based on the current expansion rate and a first preset expansion rate, wherein the number of codewords is used to indicate the number of preset codewords encoded in a target substream that meets a preset condition, and the preset codewords are encoded into the target substream when there is the target substream that meets the preset condition; decoding the code stream based on the number of codewords.
In the eighteenth aspect, the present application provides an image decoding apparatus, including:
a processing module, configured for parsing a code stream obtained after an encoding unit is encoded, wherein the encoding unit includes encoding blocks of multiple channels, and the code stream includes multiple substreams obtained after the encoding blocks of the multiple channels are encoded, and the multiple substreams correspond one-to-one with the multiple channels; determining a position of a reference prediction block from the multiple substreams based on block vectors BVs of the reference prediction blocks parsed from at least one of the multiple substreams, wherein the reference prediction blocks are used to characterize a prediction value of a decoding block decoded in an intra block copy IBC mode, and the BVs of the reference prediction blocks are used to indicate positions of the reference prediction blocks in a reconstructed image block; determining the prediction value of the decoding block decoded in the IBC mode based on information about the positions of the reference prediction blocks; reconstructing the decoding block decoded in the IBC mode based on the prediction value.

In the nineteenth aspect, the present application provides an image decoding apparatus, including:

a processing module, configured for parsing a code stream obtained after an encoding unit is encoded, wherein the encoding unit includes encoding blocks of multiple channels; if a mode flag is parsed from substreams obtained by encoding of the encoding blocks of multiple channels and a second total code length is greater than a remaining size of a code stream buffer, then determining that a target decoding mode for the substreams is a fallback mode, wherein the mode flag is used to indicate whether the encoding blocks of the multiple channels are encoded in the fallback mode; the second total code length is a total code length of the code stream obtained by encoding of all of the encoding blocks of the multiple channels in a first encoding mode; the first encoding mode is a mode in which sample values in an encoding block are encoded in a first fixed-length code; a code length of the first fixed-length code is less than or equal to an image bit width of an image to be processed; the image bit width is used to characterize the number of bits required to encode and store each sample in the image to be processed; parsing a preset flag bit in the substreams, and determining a target fallback mode, wherein the target fallback mode is a type of fallback mode, the preset flag bit is used to indicate a type of the fallback mode used for encoding of the encoding blocks of the multiple channels, the fallback mode includes a first fallback mode and a second fallback mode; decoding the substreams in the target fallback mode.

In the twentieth aspect, the present application provides a video encoder including a processor and a memory; the memory stores instructions that can be executed by the processor therein; the processor is configured to, when executing instructions, cause the video encoder to carry out the image encoding methods described in the first to fourth aspects above.

In the twenty-first aspect, the present application provides a video decoder including a processor and a memory; the memory stores instructions that can be executed by the processor therein ; the processor is configured to, when executing instructions, cause the video decoder to carry out the image decoding methods described in the fifth to eleventh aspects above.

In the twenty-second aspect, the present application provides a computer program product that, when run on an image encoding apparatus, causes the image encoding apparatus to execute the image encoding methods described in the first to fourth aspects above.

In the twenty-third aspect, the present application provides a readable storage medium including software instructions; the software instructions, when running in the image encoding apparatus, causing the image encoding apparatus, cause the image encoding apparatus to carry out the methods described in the first to fourth aspects, and when running in the image decoding apparatus, cause the image decoding apparatus to carry out the image decoding methods described in the fifth to eleventh aspects above.

In the twenty-fourth aspect, the present application provides a chip including a processor and an interface, wherein the processor is coupled to a memory through the interface, and when the processor executes a computer program in the memory or when an image encoding apparatus executes instructions, the method described in any one of the first to fourth aspects is executed.

**Brief Description of the Drawings**

In order to more clearly describe the technical solutions in the embodiments of the present application, accompanying drawings that need to be used in the embodiments will be briefly described below. It is obvious that accompanying drawings described below are for only some of the embodiments of the present application. Those skilled in the art may also obtain other accompanying drawings based on these accompanying drawings without any creative efforts..

Figure 1 is a schematic framework diagram of substream parallel technology;

Figure 2 is a schematic diagram of a substream interweaving process at an encoder;

Figure 3 is a schematic diagram of a format of a substream interweaving unit;

Figure 4 is a schematic diagram of a reverse substream interweaving process at a decoder;

Figure 5 is another schematic diagram of a substream interweaving process at an encoder;

Figure 6 is a schematic composition diagram of a video encoding and decoding system provided in an embodiment of the present application;

Figure 7 is a schematic composition diagram of a video encoder provided in an embodiment of the present application;

Figure 8 is a schematic structure diagram of a video decoder provided in an embodiment of the present application;

Figure 9 is a schematic flow diagram of video encoding and decoding provided in an embodiment of the present application;

Figure 10 is a schematic composition diagram of an image encoding apparatus and image decoding apparatus provided in an embodiment of the present application;

Figure 11 is a schematic flow diagram of an image encoding method provided in an embodiment of the present application;

Figure 12 is a schematic flow diagram of an image decoding method provided in an embodiment of the present application;

Figure 13 is a schematic flow diagram of another image encoding method provided in an embodiment of the present application;

Figure 14 is a schematic flow diagram of another image decoding method provided in an embodiment of the present application;

Figure 15 is a schematic flow diagram of yet another image decoding method provided in an embodiment of the present application;

Figure 16 is a schematic flow diagram of yet another image encoding method provided in an embodiment of the present application;

Figure 17 is a schematic flow diagram of yet another image encoding method provided in an embodiment of the present application;

Figure 18 is a flow schematic diagram of yet another image decoding method provided in an embodiment of the present application;

Figure 19 is a schematic flow diagram of yet another image encoding method provided in an embodiment of the present application;

Figure 20 is a schematic flow diagram of yet another image decoding method provided in an embodiment of the present application;

Figure 21 is a schematic flow diagram of yet another image encoding method provided in an embodiment of the present application;

Figure 22 is a flow schematic diagram of yet another image encoding method provided in an embodiment of the present application;

Figure 23 is a schematic flow diagram of yet another image decoding method provided in an embodiment of the present application;

Figure 24 is a schematic flow diagram of yet another image encoding method provided in an embodiment of the present application;

Figure 25 is a schematic flow diagram of yet another image decoding method provided in an embodiment of the present application;

Figure 26 is a schematic flow diagram of yet another image encoding method provided in an embodiment of the present application;

Figure 27 is a schematic flow diagram of yet another image decoding method provided in an embodiment of the present application;

Figure 28 is a schematic composition diagram of an image encoding apparatus provided in an embodiment of the present application;

**Detailed Description**

The technical solutions in the embodiments of the present application will be clearly and completely described below with reference to the accompanying drawings in the embodiments of the present application. Obviously, the described embodiments are only some, and not all, of the embodiments of the present application. Based on the embodiments in the present disclosure, all other embodiments acquired by those skilled in the art without any creative efforts fall into the protection scope of the present disclosure.

In the description of the present application, unless otherwise specified, "/" means "or", for example, A/B can represent A or B. The term "and/or" herein is only a description of the association relationship between related objects, indicating that there can be three types of relationships. For example, A and/or B can represent: A exists alone, A and B exist simultaneously, and B exists alone. In addition, "at least one" refers to one or multiple, and "multiple" refers to two or more. The words such as "first" and "second" are not to limit the quantity or execution order, and the words such as "first" and "second" are not to limit as necessarily different.

It should be noted that in the present application, words such as "exemplarily" or "for example" are used to indicate examples, instance or illustrations. Any embodiments or design described as "exemplary" or "for example" in the present application should not be interpreted as being more preferred or advantageous than other embodiments or designs. Specifically, the use of words such as "exemplarily" or "for example" is intended to present relevant concepts in a concrete way.

In order to improve the performance of an encoder, a technique called substream parallel (it can also be referred to as substream interweaving) is proposed.

For an encoder, the substream parallel means encoding syntax elements of encoding blocks (CBs) of different channels (such as a luminance channel, a first chrominance channel, and a second chrominance channel, etc.) of an encoding unit (CU) by using multiple entropy encoders to obtain multiple substreams, and interweaving the multiple substreams into a bit stream with data packets of a fixed size. Correspondingly, for a decoder, the substream parallel means that the decoder decodes different substreams in parallel by using different entropy decoders.

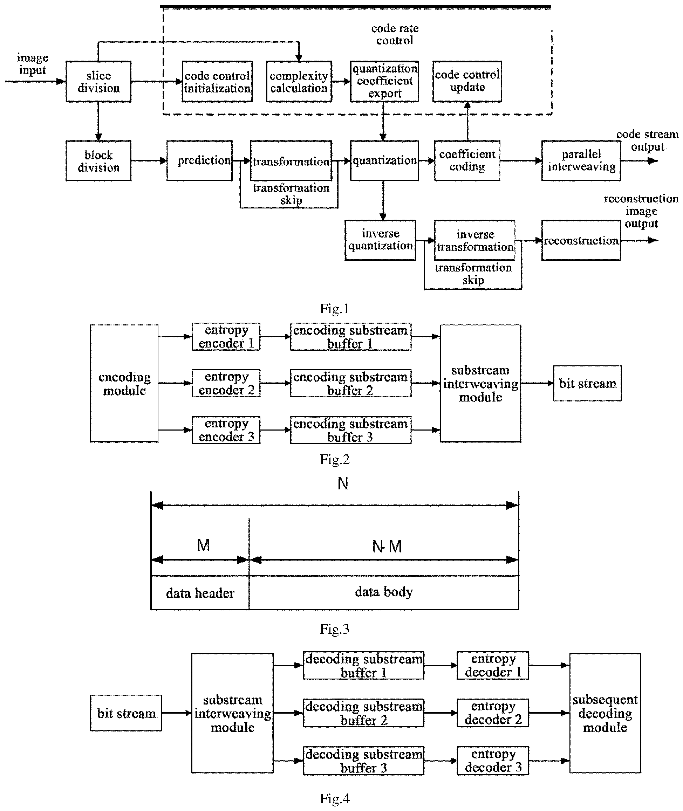

Exemplarily, Figure 1 is a schematic framework diagram of substream parallel technology. As shown in Figure 1, taking the encoder as an example, a specific application timing of substream parallel technology is after encoding the syntax elements (such as transformation coefficients and quantization coefficients). The encoding process of other parts in Figure 1 can refer to the description of a video encoding and decoding system provided in the following embodiments of the present application, and will not be repeated here.

Exemplarily, Figure 2 is a schematic diagram of a substream interweaving process at the encoder. As shown in Figure 2, taking an image block to be encoded including three channels as an example, an encoding module (such as a prediction module, transformation module, and quantization module, etc.) can output the syntax elements and quantized transformation coefficients of these three channels, and then entropy encoder 1, entropy encoder 2, and entropy encoder 3 respectively encode the syntax elements and quantized transformation coefficients of these three channels to obtain substreams corresponding in one to one with the channels respectively, and push the respective substreams of the three channels into encoding substream buffer 1, encoding substream buffer 2, and encoding substream buffer 3. A substream interweaving module can interweave the substreams in encoding substream buffer 1, encoding substream buffer 2, and encoding substream buffer 3, and finally output a bit stream (or also known as a code stream) after interweaving the multiple substreams.

Exemplarily, Figure 3 is a schematic diagram of a format of a substream interweaving unit. As shown in Figure 3, a substream can be composed of substream interweaving units, which can also be called substream segments. The length of a substream segment is N bits, and the substream segment includes a data header of M bits and a data body of N-M bits.

The data header is used to indicate a substream to which the current substream segment belongs. N can be 512, and M can be 2.

Exemplarily, Figure 4 is a schematic diagram of a reverse substream interweaving process at the decoder. As shown in Figure 4, also taking an image block to be encoded that is encoded by the encoder including three channels as an example, after the bit stream output by the encoder is input to the decoder, a substream interweaving module in the decoder can firstly perform a reverse substream interweaving process on the bit stream, to decompose the bit stream into the respective substreams of the three channels, and pushes the respective substreams of the three channels into decoding substream buffer 1, decoding substream buffer 2, and decoding substream buffer 3 respectively. For example, taking the substream segment shown in Figure 3 as an example, the decoder can extract a data packet with a N-bit length from the bit stream each time. By parsing the data header of M bits, a target substream to which the current substream segment belongs is obtained, and the remaining data body in the current substream segment is placed in a decoding substream buffer corresponding to the target substream.

Entropy decoder 1 can decode a substream in decoding substream buffer 1, to obtain the syntax elements and a quantized transformation coefficient of one channel; entropy decoder 2 can decode a substream in decoding substream buffer 2 to obtain the syntax elements and a quantized transformation coefficient of another channel; entropy decoder 3 can decode a substream in decoding substream buffer 3, to obtain the syntax elements and a quantized transformation coefficient of yet another channel. Finally, the syntax elements and quantized transformation coefficient of each of the three channels are input into a subsequent decoding module for decoding, to obtain the decoded image.

The process of substream interweaving is described below by taking the encoder as an example.

Each substream segment in an encoding substream buffer contains encoded bits generated by encoding of at least one image block. In substream interweaving, firstly, the order of an image block corresponding to the initial bits of the data body of each substream segment can be labeled. During the substream interweaving process, different substreams are interweaved according to this order label.

In an embodiment, the substream interweaving process can label the image block through a block count queue.

For example, the block count queue is implemented through a first in, first out queue. The encoder sets a count, i.e., block count, for the currently encoded image block and sets a block count queue, i.e., counter queue[ss_idx], for each substream. At the beginning of encoding of each slice, the block count is initialized to 0, each counter queue[ss_idx] is initialized to be empty, and then a 0 is pushed into each counter queue[ss_idx].

After each image block (or encoding unit (CU)) has been encoded, the block count queue is updated. The updating process is as follows:

Step 1: increasing the count of the currently encoded image block by 1, that is, block count += 1.
Step 2: selecting one substream ss_idx.
Step 3: calculating the number of substream segments num_in_buffer[ss_idx] that can be constructed in an encoding substream buffer corresponding to the substream ss_idx. It is assumed that the encoding substream buffer corresponding to the substream ss_idx is buffer[ss_idx] and the amount of data included in buffer[ss_idx] is buffer [ss_idx].fullness. Also taking the substream segment size being N bits and the substream segment including the data header of M bits shown in Figure 3 as an example, num_in_buffer[ss_idx] can be calculated according to the following formula (1)

$$\text{num\_in\_buffer[ss\_idx]=buffer[ss\_idx].fullness}/(N-M) \qquad \text{formula （1）}$$

wherein "/" represents exact division.
Step 4: comparing the current block count queue length num_in_queue[ss_idx] with the number of substream segments num_in_buffer[ss_idx] that can be constructed in the encoding substream buffer; if the current block count queue length num_in_queue[ss_idx] is equal to the number of substream segments num_in_buffer[ss_idx] that can be constructed in the encoding substream buffer, then pushing the count of the currently encoded image block into the block count queue, i.e., counter_queue[ss_idx].push(block_count).
Step 5: returning to Step 2 and processing the next substream until all substreams have been processed.

After updating the block count queue, the encoder can interweave the substreams in individual encoding substream buffers. The interweaving process is as follows:

Step 1: selecting one substream ss_idx.
Step 2: determining whether the amount of data, i.e., buffer[ss_idx].fullness, included in an encoding substream buffer buffer[ss_idx] corresponding to the substream ss_idx is greater than or equal to N-M. If the amount of data, i.e., buffer [ss_idx].fullness, included in an encoding substream buffer buffer[ss_idx] corresponding to the substream ss_idx is greater than or equal to N-M, executing step 3; if the amount of data, i.e., buffer[ss_idx].fullness, included in an encoding substream buffer buffer[ss_idx] corresponding to the substream ss_idx is less than N-M, executing step 6.
Step 3: determining whether the first element value in the block count queue for the substream ss_idx is a minimum value among block count queues for all substreams. If the first element value in the block count queue for the substream ss_idx is a minimum value among block count queues for all substreams, executing step 4; if the first element value in the block count queue for the substream ss_idx is not a minimum value among block count queues for all substreams, executing step 6.

Step 4: constructing one substream segment using current data in the encoding substream buffer. For example, extracting data with a length of N-M bits from the encoding substream buffer buffer[ss_idx], and adding a data header of M bits, with data in the data header being ss_idx, and concatenating the data header of M bits and the extracted data of N-M bits into a substream segment of N bits, and feeding the substream segment into the bit stream finally output by the encoder.

Step 5: popping up (or deleting) the first element of the block count queue for the substream ss_idx, i.e., counter_queue[ss_idx].pop().

Step 6: returning to Step 1 and processing the next substream until all substreams have been processed.

In an embodiment, if the current image block is the last image block of one slice, the encoder may further perform the following steps after the above interweaving process to pack the remaining data in the encoding substream buffer:

Step 1: determining if at least one of the all encoding substream buffers is currently non-empty. If at least one of the all encoding substream buffers is currently non-empty, executing step 2; otherwise, end.

Step 2: selecting one substream ss_idx.

Step 3: determining whether the first element value of a block count queue for the substream ss_idx is a minimum value among block count queues for all substreams. If the first element value of a block count queue for the substream ss_idx is a minimum value among block count queues for all substreams, executing step 4; if the first element value of a block count queue for the substream ss_idx is not a minimum value among block count queues for all substreams, executing step 6.

Step 4: if the amount of data in the encoding substream buffer buffer[ss_idx] corresponding to the substream ss_idx is less than N-M bits, filling 0 into the encoding substream buffer buffer[ss_idx] until the amount of data in the encoding substream buffer buffer[ss_idx] reaches N-M bits; at the same time, popping up (or deleting) the first element value of the block count queue for the substream, i.e., counter_queue[ss_idx].pop(), and pushing MAX-INT representing a maximum value within the data range, i.e., counter_queue[ss_idx].push(MAX_INT).

Step 5: constructing one substream segment. Step 5 here can refer to step 4 in the substream interweaving process mentioned above and will not be repeated.

Step 6: returning to Step 2 and processing the next substream. If all substreams have been processed, returning to step 1.

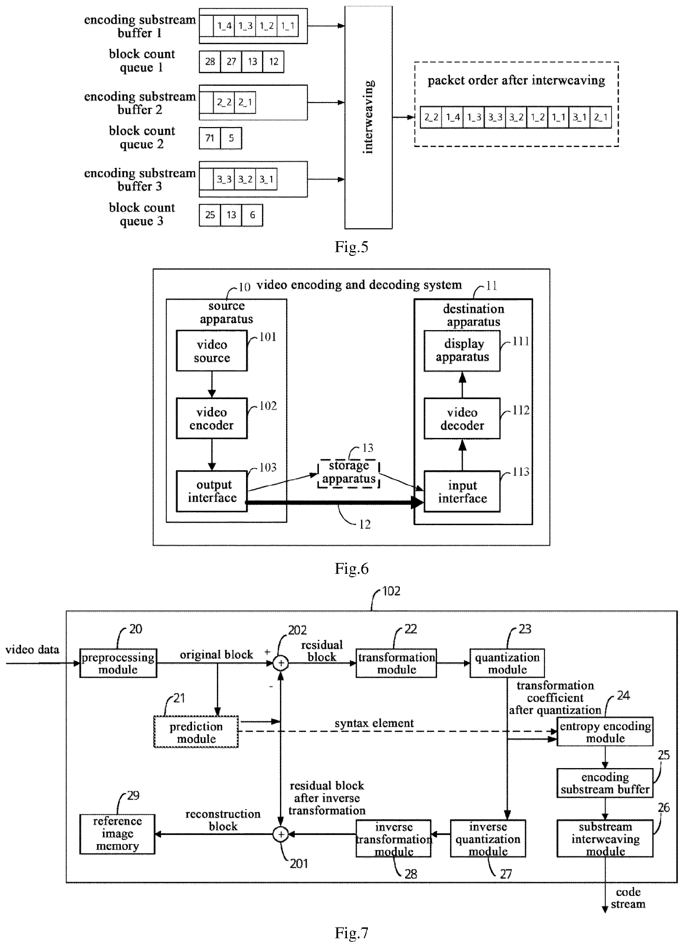

Exemplarily, Figure 5 is another schematic diagram of the substream interweaving process at the encoder. As shown in Figure 5, also taking an image block to be encoded includes three channels as an example, the encoding substream buffers can include encoding substream buffer 1, encoding substream buffer 2, and encoding substream buffer 3.

The substream segments in encoding substream buffer 1 are 1_1, 1_2, 1_3, and 1_4 in order from front to back. The labels in block count queue 1 for substream 1 corresponding to the encoding substream buffer 1 are 12, 13, 27, and 28 in order. The substream segments in encoding substream buffer 2 are 2_1 and 2_2 in order from front to back. The labels in block count queue 2 for substream 2 corresponding to the encoding substream buffer 2 are 5 and 71 in order. The substream segments in encoding substream buffer 3 are 3_1, 3_2 and 3_3 in order from front to back. The labels in block count queue 3 for substream 3 corresponding to the encoding substream buffer 3 are 6, 13 and 25 in order. The substream interweaving module can interweave the substream segments in encoding substream buffer 1, encoding substream buffer 2, and encoding substream buffer 3 according to the order of labels in block count queue 1, block count queue 2, and block count queue 3.

The order of substreams segment in the interweaved code stream is as follows: substream segment 2_1 corresponding to minimum label 5, substream segment 3_1 corresponding to label 6, substream segment 1_1 corresponding to label 12, substream segment 1_2 corresponding to label 13, substream segment 3_2 corresponding to label 13, substream segment 3_3 corresponding to label 25, substream segment 1_3 corresponding to label 27, substream segment 1_4 corresponding to label 28, and substream segment 2_2 corresponding to label 71.

However, there are dependencies among multiple substreams in interweaving. Taking the encoder as an example, a filling speed of filling substreams into different substream buffers varies, and substream bits filled into a substream buffer with a faster filling speed is more than that filled into a substream buffer with a slower filling speed within a same time period. The substream buffer with a faster filling speed continues to be filled with data during waiting for the substream buffer with a slower filling speed to be filled with one substream segment. In order to ensure the integrity of the filled data, all substream buffers need to be set larger, which increases hardware costs.

In this case, the embodiments of the present application provide an image encoding method and an image decoding method, an apparatus, and a storage medium that can encode through various improved encoding modes, thereby controlling the number of bits of a largest encoding block and the number of bits of a smallest encoding block, so as to reduce a theoretical expansion rate of the encoded block to be encoded, and reduce the difference in filling speeds among different substream buffers, thereby reducing a preset space size of the substream buffer and lowering hardware costs.

The following will be introduced in conjunction with the drawings.

Figure 6 is a schematic composition diagram of a video encoding and decoding system provided in an embodiment of the present application. As shown in Figure 6, the video encoding and decoding system includes a source apparatus 10 and a destination apparatus 11.

The source apparatus 10 generates encoded video data, and can also be referred to as an encoder, video encoder, video encoding apparatus, or video encoding device, etc. The destination apparatus 11 can decode the encoded video data generated by the source apparatus 10, and can also be referred to as a decoder, video decoder, video decoding apparatus, or video decoding device, etc. The source apparatus 10 and/or the destination apparatus 11 may include at least one processor and a memory coupled to the at least one processor. The memory may include but is not limited to read-only memory (ROM), random access memory (RAM), electrically erasable programmable read-only memory (EEPROM), flash memory, or any other medium that can be used to store the desired program code in the form of instructions or data structures that are accessible by a computer, which is not specifically limited in the present application.

The source apparatus 10 and the destination apparatus 11 may include various apparatuses, including desktop computers, mobile computing apparatuses, notebook (e.g., laptop) computers, tablet computers, set-top boxes, telephone handheld devices such as so-called "smart" phones, televisions, cameras, display apparatuses, digital media players, video game consoles, in car computers, or similar electronic devices.

The destination apparatus 11 can receive the encoded video data from the source apparatus 10 via a link 12. The link 12 may include one or more media and/or apparatuses capable of moving the encoded video data from the source apparatus 10 to the destination apparatus 11. In one instance, the link 12 may include one or more communication media that enable source apparatus 10 to transmit the encoded video data directly to the destination apparatus 11 in real-time. In this instance, the source apparatus 10 may modulate the encoded video data according to a communication standard (e.g. a wireless communication protocol), and may transmit the modulated video data to the destination apparatus 11. The above-mentioned one or more communication media may include a wireless and/or wired communication media, such as a radio frequency (RF) spectrum, and one or more physical transmission lines. The above one or more communication media may form part of a packet-based network, such as a local area network, wide area network, or global network (e.g., Internet), etc. The above one or more communication media may include routers, switches, base stations, or other devices that enable communication from the source apparatus 10 to the destination apparatus 11.

In another instance, source apparatus 10 may output the encoded video data from an output interface 103 to a storage apparatus 13. Similarly, the destination apparatus 11 can access the encoded video data from the storage apparatus 13 through an input interface 113. The storage apparatus 13 may include various locally accessible data storage media, such as Blu-ray discs, high-density digital video discs (DVD), compact disc read-only memory (CD-ROM), flash memory, or other suitable digital storage media for storing encoded video data.

In another instance, the storage apparatus 13 may correspond to a file server or another intermediate storage apparatus that stores encoded video data generated by the source apparatus 10. In this instance, the destination apparatus 11 can acquire, from the storage apparatus 13, video data stored therein via streaming or downloading. The file server can be any type of server capable of storing encoded video data and transmitting the encoded video data to the destination apparatus 11. For example, the file server may include a World Wide Web (Web) server (e.g. for websites), a File Transfer Protocol (FTP) server, a Network Attached Storage (NAS) apparatus, and local disk drives.

The destination apparatus 11 can access the encoded video data through any standard data connection (e.g. Internet connection). The instance type of the data connection includes a wireless channel, a wired connection (e.g., a cable modem, etc.) or a combination of both, which are suitable for accessing encoded video data stored on a file server. The encoded video data can be transmitted from the file server through streaming, downloading, or a combination of both.

It should be noted that the image encoding method and image decoding method provided in the embodiments of the present application are not limited to wireless application scenarios.

By way of example, the image encoding method and image decoding method provided in the embodiments of the present application can be applied to video encoding and decoding that supports various multimedia applications as follows: aerial television broadcasting, cable television transmission, satellite television transmission, streaming video transmission (e.g. via the Internet), encoding of video data stored on a data storage media, decoding of video data stored on a data storage media, or other applications. In some instances, the video encoding and decoding system can be configured to support unidirectional or bidirectional video transmission to support applications such as video streaming, video playback, video broadcasting, and/or video telephony.

It should be noted that the video encoding and decoding system shown in Figure 6 is only an example of a video encoding and decoding system, and is not a limitation on the video encoding and decoding system in the present application. The image encoding method and image decoding method provided by the present application are also suitable for scenarios where there is no data communication between the encoding apparatus and the decoding apparatus. In other embodiments, the video data to be encoded or the encoded video data can be retrieved from a local memory or can be streamed over the network, etc. The video encoding apparatus can code the video data to be encoded and store the encoded video data in the memory. The video decoding apparatus can also acquire the encoded video data from the memory and decode the same.

In the embodiment of Figure 6, the source apparatus 10 includes a video source 101, a video encoder 102, and an output interface 103. In some embodiments, the output interface 103 may include a modulator/demodulator (modem) and/or a transmitter. The video source 101 may include a video capture apparatus (such as a camera), a video archive containing previously captured video data, a video input interface for receiving video data from a video content provider, and/or a computer graphics systems for generating video data, or a combination of these sources of video data.

The video encoder 102 can encode video data from the video source 101. In some embodiments, the source apparatus 10 directly transmits the encoded video data to the destination apparatus 11 via the output interface 103. In other embodiments, the encoded video data may also be stored on storage apparatus 13 for later access by the destination apparatus 11 for decoding and/or playback.

In the embodiment of Figure 6, the destination apparatus 11 includes a display apparatus 111, a video decoder 112, and an input interface 113. In some embodiments, the input interface 113 includes a receiver and/or a modem. The input interface 113 can receive encoded video data via the link 12 and/or from the storage apparatus 13. The display apparatus 111 can be integrated with the destination apparatus 11 or can be external to the destination apparatus 11. Generally speaking, the display apparatus 111 displays the decoded video data. The display apparatus 111 may include various types of display apparatuses, such as a liquid crystal display, a plasma display, an organic light emitting diode display, or other types of display apparatuses.

In an embodiment, the video encoder 102 and the video decoder 112 may each be integrated with an audio encoder and decoder, and may include appropriate multiplexer-demultiplexer units or other hardware and software to process the encoding of both audio and video in a common data stream or separate data streams.

The video encoder 102 and the video decoder 112 may include at least one microprocessor, digital signal processor (DSP), application-specific integrated circuit (ASIC), field programmable gate array (FPGA), discrete logic, hardware, or any combination thereof. If the encoding method provided in the present application is implemented using software, the instructions for the software can be stored in a suitable non-volatile computer-readable storage medium, and at least one processor can be used to execute the instructions to implement the present application.

The video encoder 102 and the video decoder 112 in the present application can operate according to a video compression standard (such as HEVC) or other industry standards, which is not specifically limited in the present application.

Figure 7 is a schematic composition diagram of the video encoder 102 provided in the embodiment of the present application. As shown in Figure 7, the video encoder 102 can perform prediction, transformation, quantization, entropy encoding and substream interweaving processes in a prediction module 21, a transformation module 22, a quantization module 23, an entropy encoding module 24, an encoding substream buffer 25, and a substream interweaving module 26, respectively. The prediction module 21, the transformation module 22, and the quantization module 23 are the above encoding module in Figure 1. The video encoder 102 also includes a preprocessing module 20 and a summer 202, where the preprocessing module 20 includes a partition module and a code rate control module. For video block reconstruction, the video encoder 102 also includes an inverse quantization module 27, an inverse transformation module 28, a summer 201, and a reference image memory 29.

As shown in Figure 7, the video encoder 102 receives video data, and the pre-processing module 20 obtains input parameters of the video data, wherein the input parameters include a resolution of an image in the video data, a sampling format of the image, bits per pixel (BPP), a bit width (also known as an image bit width), and other information. The BPP refers to the number of bits occupied by a unit pixel. The bit width refers to the number of bits occupied by one pixel channel in a unit pixel. For example, one pixel is represented by the values of YUV three pixel channels, if each pixel channel occupies 8 bits, then the bit width of the pixel is 8, and the BPP of the pixel is $3 \times 8 = 24$ bits.

The partition module in the preprocessing module 20 partitions an image into original blocks (or also known as encoding units (CUs)). The original blocks (or also known as encoding units (CUs)) may include encoding blocks for multiple channels. For example, the multiple channels can be RGB channels or YUV channels, etc. The embodiments of the present application do not limit this. In an embodiment, this partition can also include partitioning into slices, image blocks, or other larger units, as well as performing video block partition based on a quadtree structure of a Large Encoding Unit (LCU) and CU. For example, the video encoder 102 encodes components of video blocks within a video slice to be encoded. Generally, a slice can be divided into multiple original blocks (and may be divided into a set of original blocks called image blocks). Usually, the sizes of CU, PU, and TU are determined in the partition module. In addition, the partition module is also used to determine the size of a code rate control unit. The code rate control unit refers to a basic processing unit in the code rate control module. For example, in the code rate control module, based on the code rate control unit, complexity information is calculated for an original block, and then a quantization parameter of the original block is calculated according to the complexity information. The partition strategy of the partition module can be preset or continuously adjusted based on the image during the encoding process. When the partition strategy is a preset strategy, the same partition strategy is also preset in the decoder accordingly to obtain the same image processing unit. The image processing unit is any of the above image blocks and corresponds one-to-one with that at the encoding side. When the partition n strategy is continuously adjusted based on the image during the encoding process, the partition strategy can be directly or indirectly encoded into the code stream. Accordingly, the decoder acquires the corresponding parameters from the code stream, to obtain the same partition strategy, and obtain the same image processing unit.

The code rate control module in the preprocessing module 20 is used to generate a quantization parameter to enable the quantization module 23 and the inverse quantization module 27 to perform relevant calculations. During the calculation of the quantization parameter, the code rate control module can obtain image information, such as the above input information, of an original block for calculation; or can obtain a reconstructed value reconstructed by the summer 201 for calculation, which is not limited in the present application.

The prediction module 21 can provide a prediction block to the summer 202 to generate a residual block, and provide the prediction block to the summer 201 for reconstruction to obtain a reconstruction block, which is used as a reference pixel for subsequent prediction. The video encoder 102 forms a pixel difference by subtracting a pixel value of the prediction block from a pixel value of an original block. This pixel difference is the residual block, and data in the residual block may include a luminance difference and a chrominance difference. The summer 201 represents one or more components that perform this subtraction operation. The prediction module 21 can also send the relevant syntax elements to the entropy encoding module 24 for merging into the code stream.

The transformation module 22 can divide the residual block into one or more TUs for transformation. The transformation module 22 can transform the residual block from a pixel domain to a transform domain (e.g. a frequency domain). For example, the residual block is transformed by using discrete cosine transform (DCT) or discrete sine transform (DST) to obtain transformation coefficients. The transformation module 32 can send the obtained transformation coefficients to the quantization module 23.

The quantization module 23 can perform quantization based on a quantization unit. The quantization unit can be the same as the CU, TU, PU mentioned above, or can be further divided in the partition module. The quantization module 23 quantizes the transformation coefficients to further reduce the code rate and obtain quantization coefficients. The quantization process can reduce the bit depth associated with some or all of the coefficients. The degree of quantization can be modified by adjusting the quantization parameter. In some feasible implementations, the quantization module 23 may then continue to scan a matrix containing the quantized transformation coefficients. Alternatively, the entropy encoding module 24 can perform the scan.

After quantization, the entropy encoding module 24 can entropy encode the quantization coefficients. For example, the entropy encoding module 24 can perform context-adaptive variable-length encoding (CAVLC), context-based adaptive binary arithmetic encoding (CABAC), syntax-based binary arithmetic encoding (SBAC), probability interval partitioning entropy (PIPE) decoding, or another entropy encoding method or technique. A substream can be obtained after entropy encoding by the entropy encoding modules 24, and multiple substreams can be obtained after entropy encoding by multiple entropy encoding modules 24. After these multiple substreams are passed through the encoding substream buffers 25 and the substream interweaving module 26 for substream interweaving, a code stream is obtained, and the code stream is transmitted to the video decoder 112 or archived for later transmission or retrieval by the video decoder 112.

The process of substream interweaving can be referred to the description with respect to Figures 1 to 5 mentioned above, and will not be repeated here.

The inverse quantization module 27 and the inverse transformation module 28 apply inverse quantization and inverse transformation respectively, and the summer 201 adds the inverse transformed residual block and the predicted residual block to generate a reconstruction block, which is used as a reference pixel for subsequent prediction of the original block. The reconstruction block is stored in the reference image memory 29.

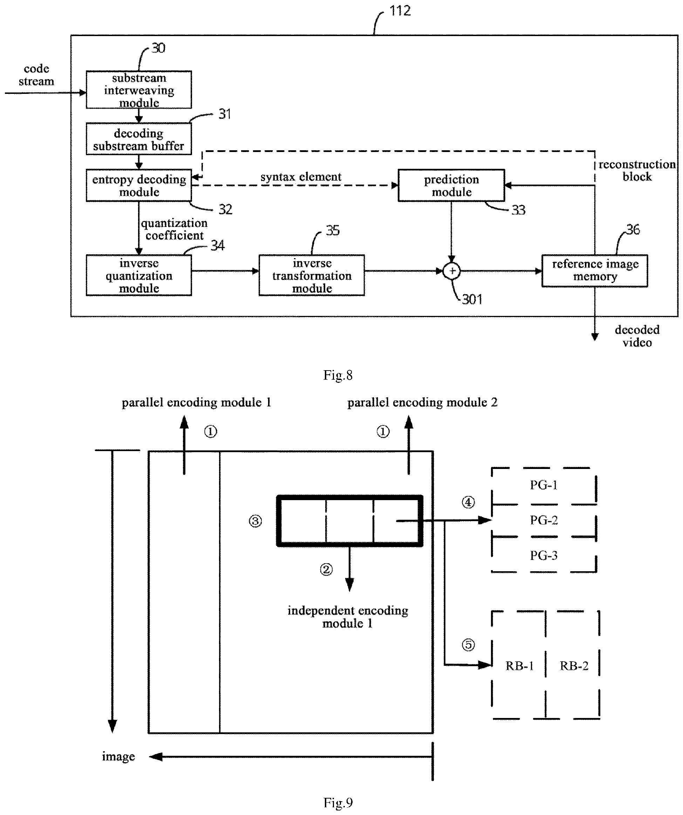

Figure 8 is a schematic structure diagram of the video decoder 112 provided in an embodiment of the present application. As shown in Figure 8, the video decoder 112 includes a substream interweaving module 30, a decoding substream buffer 31, an entropy decoding module 32, a prediction module 33, an inverse quantization module 34, an inverse transformation module 35, a summer 301, and a reference image memory 36.

The entropy decoding module 32 includes a parsing module and a code rate control module. In some feasible implementations, the video decoder 112 may perform an exemplary decoding process which is inverse to the encoding process described with respect to the video encoder 102 from Figure 7.

During the decoding process, the video decoder 112 receives the code stream of the encoded video from the video encoder 102. Further, inverse substream interweaving is performed on the code stream by the substream interweaving module 30 to obtain multiple substreams, which pass through their respective decoding substream buffers and flow into their respective entropy decoding modules 32. Taking one substream as an example, the parsing module in the entropy decoding module 32 of the video decoder 112 performs entropy decoding on the substream to generate quantization coefficients and syntax elements. The entropy decoding module 32 transmits the syntax elements to the prediction module 33. The video decoder 112 may receive the syntax elements at a video slice level and/or video block level.

The code rate control module in the entropy decoding module 32 generates a quantization parameter based on information of an image to be decoded obtained by the paring module, so that the inverse quantization module 34 performs relevant calculations. The rate control module can also calculate the quantization parameter based on a reconstruction block reconstructed by the summer 301.

The inverse quantization module 34 performs inverse quantization (e.g., dequantization) on the quantization coefficient provided in the substream and decoded by the entropy decoding module 32 and the generated quantization parameters provided in the substream and decoded by the entropy decoding module 32. The inverse quantization process may include determining the degree of quantization using the quantization parameter calculated by the video encoder 102 for each video block in a video strip, and similarly determining the degree of inverse quantization applied. The inverse transformation module 35 applies inverse transform (such as DCT, DST, etc.) to the inverse quantized transformation coefficients, and generates an inverse transformed residual block in the pixel domain from the inverse quantized transformation coefficients based on an inverse transformation unit. The size of the inverse transformation unit is the same as that of TU, and the inverse transformation method and the transformation method use the forward transformation and inverse transformation in the same transformation method respectively. For example, the inverse transformation of DCT and DST is inverse DCT, inverse DST, or conceptually similar inverse transformation process.

After the prediction module 33 generates a prediction block, the video decoder 112 forms a decoded video block by summing the inverse transformed residual block from the module 35 with the prediction block. The summer 301 represents one or more components that perform this summation operation. If necessary, a deblocking filter can also be applied to filter the decoded block to remove block effect artifacts. The decoded image block in a given frame or image is stored in the reference image memory 36 as a reference pixel for subsequent prediction.

The present embodiment provides a possible implementation of video (image) encoding and decoding, as shown in Figure 9. Figure 9 is a schematic flow diagram of video encoding and decoding provided in an embodiment of the present embodiment, and the video encoding and decoding implementation includes processes ① to ⑤. Processes ① to ⑤ can be executed by any one or more of the source apparatus 10, video encoder 102, destination apparatus 11, or video decoder 112 mentioned above.

Process ①: dividing an image frame into one or more parallel encoding units which do not overlap with each other. The one or more parallel encoding units have no dependency on each other and can be encoded and decode completely in parallel/independently, such as parallel encoding unit 1 and parallel encoding unit 2.

Process ②: each parallel encoding unit can be further divided into one or more independent encoding units that do not overlap with each other. The independent encoding units may not depend on each other, but can share some parallel encoding unit header information.

An independent encoding unit can include three channels, namely, luminance Y, first chrominance Cb, and second chrominance Cr, or RGB three channels, or can include only one of the channels. If the independent encoding unit includes three channels, the sizes of these three channels can be exactly the same or different, which specifically depends on the input format of the image. The independent encoding unit can also be understood as one or more processing units formed by N channels included in each parallel encoding unit. For example, the three channels Y, Cb, and Cr mentioned above are three channels that compose the parallel encoding unit, of which each can be an independent encoding unit. Alternatively, Cb and Cr can be collectively referred to as a chrominance channel, and then, the parallel encoding unit includes an independent encoding unit composed of the luminance channel and an independent encoding unit composed of the chrominance channel.

Process ③: each independent encoding unit can be further divided into one or more encoding units which do not overlap each other. Individual encoding units within the independent encoding unit can depend on each other, for example, the encoding units can be pre-encoded and pre-decoded with reference to each other.

If the size of the encoding unit is the same as that of the independent encoding unit (i.e. the independent encoding unit is divided into only one encoding unit), then the size of the encoding unit can be all the sizes described in process ②.

The encoding unit can include three channels, namely, luminance Y, first chrominance Cb, and second chrominance Cr (or RGB three channels), or can include only one of the channels. If it contains three channels, the sizes of these channels can be exactly the same or different, which specifically depends on the input format of the image.

It is worth noting that process ③ is one optional step in video encoding and decoding methods, and the video encoder/decoder can encode/decode the residual coefficients (or residual values) of the independent encoding units obtained in process ②.

Process ④: the encoding unit can be further divided into one or more prediction groups (PGs) which do not overlap each other. PG can also be referred to as Group for short. Each PG is encoded and decoded in a selected prediction mode to obtain a prediction value of the PG, to constitute a prediction value of the entire encoding unit. The residual value of the encoding unit is obtained based on the prediction value and an original value of the encoding unit.

Process ⑤: the encoding units can be grouped based on residual values of the encoding units, to obtain one or more residual blocks (RBs) which do not overlap each other. The residual coefficients of the RBs are encoded and decoded in a selected mode to form a residual coefficient stream. Specifically, it can be divided into two categories: transforming the residual coefficients and not transforming the residual coefficients.

The selected mode for the method of encoding and decoding residual coefficients in process ⑤ can include, but is not limited to, any of semi-fixed length encoding method, exponential Golomb encoding method, Golomb-Rice encoding method, truncated unary code encoding method, run length encoding method, direct encoding original residual values, etc.

For example, the video encoder can directly encode the coefficients within the RBs.

For another example, the video encoder can also perform transformation, such as DCT, DST, Hadamard transformation, etc., on the residual blocks, and then encode the transformed coefficients.

As a possible example, when RB is small, the video encoder can directly quantize the various coefficients within the RB uniformly and then perform binary encoding. If the RB is large, the RB can be further divided into multiple coefficient groups (CGs), and then the CGs can be uniformly quantized and then binarily encoded. In some embodiments of the present application, the coefficient group (CG) and the quantization group (QG) may be the same.

A portion of encoding residual coefficients in a method of semi-fixed length encoding is taken as an example for exemplary description below. Firstly, a maximum value among absolute values of residuals within an RB as a modified maximum (mm). Secondly, the number of bits for encoding a residual coefficient within the RB block is determined (the number of bits for encoding each residual coefficient within the same RB is consistent). For example, if a critical limit (CL) of the current RB is 2 and the current residual coefficient is 1, then 2 bits are required to encode the residual coefficient 1, represented as 01. If the CL of the current RB is 7, it means a 8-bit residual coefficient and a 1-bit sign bit are to be encoded. The determination of CL refers to finding the minimum M value that satisfies the condition that all residuals in the current sub block are within a range of $[-2^{(M-1)}, 2^{(M-1)}]$. If there are two boundary values, $-2^{(M-1)}$ and $2^{(M-1)}$, at the same time, M should be increased by 1, that is, M+1 bits are required to encode all residuals of the current RB. If there is only one of the two boundary values $-2^{(M-1)}$ and $2^{(M-1)}$, a Trailing bit needs to be encoded to determine whether the boundary value is $-2^{(M-1)}$ or $2^{(M-1)}$. If none of $-2^{(M-1)}$ or $2^{(M-1)}$ exists in all of the residuals, there is no need to encode the Trailing bit.

Furthermore, for certain special cases, the video encoder can also directly encode the original values of the image instead of residual values.

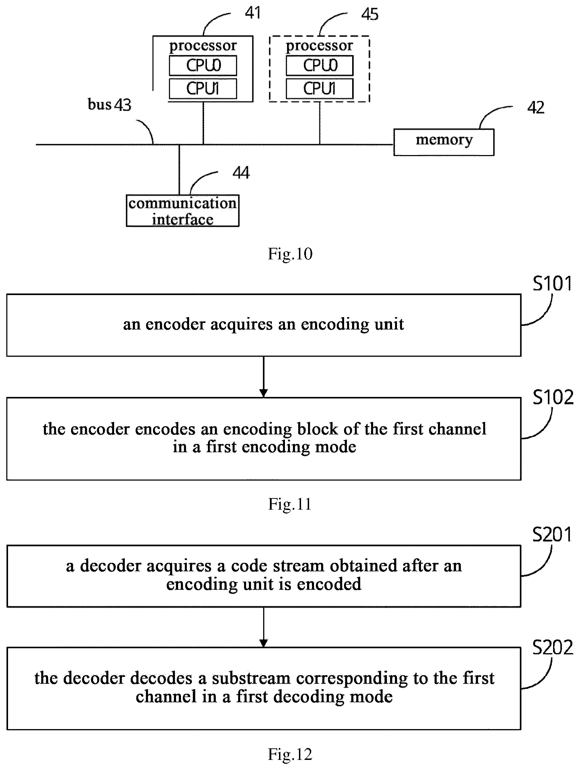

The above video encoder 102 and video decoder 112 can also be implemented through another implementation form, such as implemented by using a universal digital processing system. Referring to Figure 10, which is a schematic composition diagram of an encoding and decoding apparatus provided in an embodiment of the present application, the encoding and decoding apparatus can be a part of the above video encoder 102 or a part of the above video decoder 112. This encoding and decoding apparatus can be applied to the encoding side (or encoder) or the decoding side (or decoder). As shown in Figure 10, the encoding and decoding apparatus includes a processor 41 and a memory 42. The processor 41 is connected to the memory 42 (e.g. interconnected via bus 43). In an embodiment, the encoding and decoding apparatus can also include a communication interface 44, which connects with the processor 41 and the memory 42, for receiving/sending data.

The processor 41 is used to execute instructions stored in memory 42 to implement image encoding methods and image decoding methods provided in the following embodiments of the present application. The processor 41 can be a central processing unit (CPU), a general-purpose processor network processor (NP), a digital signal processing (DSP), a microprocessor, a microcontroller, a programmable logic device (PLD), or any combination thereof. The processor 41 can also be any other apparatus with processing functions, such as a circuit, a device, or a software module, which are not limited in the embodiments of the present application. In one example, the processor 41 can include one or more CPUs, such as CPU0 and CPU1 in Figure 10. As an optional implementation, the electronic device may include multiple processors, for example, may include the processor 45 (illustrated by dashed lines in Figure 10) in addition to processor 41.

The memory 42 is used for storing instructions. For example, the instructions can be computer programs. In an embodiment, the memory 42 may be a read-only memory (ROM) or other type of static storage device that can store static information and/or instructions, or may be a random access memory (RAM) or other type of dynamic storage device that can store information and/or instructions, or may be an electrically erasable programmable read-only memory (EEPROM), a compact disc read-only memory (CD-ROM) or other compact disc storage, optical disc storage (including compressed optical discs, laser discs, CDs, digital versatile discs, Blu-ray discs, etc.), magnetic disk storage medium, or other magnetic storage devices, etc., which is not limited in the embodiments of the present application.

It should be noted that the memory 42 can exist independently of the processor 41 or be integrated with the processor 41. The memory 42 can be located inside or outside the encoding and decoding apparatus, which is not limited in the embodiments of the present application.

The bus 43 is used to transmit information among various components included in the encoding and decoding apparatus. The bus 43 can be industry standard architecture (ISA) line, peripheral component interconnect (PCI) line or extended industry standard architecture (EISA) line, etc. The bus 43 can be divided into an address line, a data line, a control line, etc. For ease of representation, only one solid line is used in the figure 10, but it does not mean that there is only one line or one type of line.

The communication interface 44 is used to communicate with other devices or other communication networks. The other communication networks can be Ethernet, radio access network (RAN), wireless local area networks (WLAN), etc. The communication interface 44 can be a module, circuit, transceiver, or any apparatus capable of achieving communication. The embodiments of the present application do not limit this.

It should be noted that the structure shown in Figure 10 does not constitute a limitation on the encoding and decoding apparatus. In addition to the components shown in Figure 10, the encoding and decoding apparatus may include more or fewer components than shown in the figure 10, or combinations of certain components, or different component arrangements.

It should be noted that the execution subject of the image encoding methods and image decoding methods provided in the embodiments of the present application may be the above-mentioned encoding and decoding apparatus, or an application (APP) installed in the encoding and decoding apparatus that provides encoding and decoding functions, or the CPU in the encoding and decoding apparatus, or, functional modules in the encoding and decoding apparatus for executing the image encoding methods and the image decoding methods. The embodiments of the present application do not limit this. For the sake of simplicity, the following description will be uniformly based on the encoder or decoder.

The image encoding methods and image decoding methods provided in the embodiments of the present application will be introduced below in conjunction with the accompanying drawings.

As described in the background and with respect to Figures 1 to 5 above, the speed of filling substreams into different substream buffers varies, and substream bits filled into a substream buffer with a faster filling speed is more than that filled into a substream buffer with a slower filling speed within a same time period. In order to ensure the integrity of the filled data, all substream buffers need to be set larger, which increases hardware costs.

In order to reasonably configure the substream buffers, the present embodiment proposes a series of improved encoding methods (such as encoding mode/prediction mode, complexity information transmission, coefficient grouping, code stream arrangement, etc.) to reduce an expansion rate of an encoding unit, thereby reducing the speed difference in encoding among the encoding blocks of individual channels of the encoding unit, to allow to reasonably configure spaces of the substream buffers and reduce the hardware costs.

The expansion rate of the encoding unit can include a theoretical expansion rate and a current (CU) expansion rate (actual expansion rate). After the encoder and decoder is determined, the theoretical expansion rate can be theoretically derived, and has a value greater than 1. If the number of bits of a substream obtained after encoding of an encoding block of a certain channel in the encoding unit is 0, then this situation needs to be removed when calculating the current expansion rate. Theoretical expansion rate = the number of bits of a CB with the highest theoretical number of bits in CU/the number of bits of a CB with the smallest theoretical number of bits in CU. Current (CU) expansion rate=the number of bits of a CB with the highest actual number of bits in the current CU/the number of bits of a CB with the smallest actual number of bits in the current CU.

In an embodiment, the relevant expansion rate can also include the current sub flow expansion rate. The current substream expansion rate=the number of bits of data in a substream buffer with the highest number of bits of data among the current multiple substream buffers/the number of bits of data in a substream buffer with the smallest number of bits of data among the current multiple substream buffers.

It should be noted that, for an encoding block of each channel or the entire encoding unit, the encoder can choose the encoding mode (or prediction mode) based on the following strategies. The various improved encoding modes in the following embodiments can be selected and determined according to the following strategies.

Strategy 1: calculating a bit consumption cost and selecting an encoding mode with the minimum bit consumption cost.

The bit consumption cost refers to the number of bits required for encoding/decoding CU. The bit consumption cost mainly includes a code length of a mode flag (or mode codeword), a code length of an encoding/decoding tool information codeword, and a code length of a residual codeword.

Strategy 2: calculating a distortion after encoding and selecting an encoding mode with the minimum distortion.

The distortion is used to indicate the difference between a reconstructed value and an original value. The distortion can be calculated using any one or more of sum of squared difference (SSD), mean squared error (MSE), sum of absolute difference (SAD) (time domain), sum of absolute transformed difference (SATD) (frequency domain), and peak signal to noise ratio (PSNR). The embodiments of the present application do not limit this.

Strategy 3: calculating a rate distortion cost and selecting an encoding mode with the lowest rate distortion cost.

The rate distortion cost refers to the weighted sum of the bit consumption cost and distortion. When performing weighted calculation, both of a weight coefficient of the bit consumption cost and a weight coefficient of the distortion after encoding can be pre-set in the encoder. The embodiments of the present application do not limit the specific values of the weight coefficients.

The improved encoding modes in the image encoding methods and image decoding methods provided by the embodiments of the present application will be described below through a series of embodiments.

I. Anti-expansion mode modification.

Optional implementation: the encoder encodes each pixel value in encoding blocks of multiple channels of an encoding unit by using an image bit width as a fixed-length code.
Modification: the encoder encodes each pixel value in the encoding blocks of multiple channels of the encoding unit with a fixed-length code that is less than or equal to the image bit width.

Embodiment 1:

Exemplarily, Figure 11 is a schematic flow diagram of an image encoding method provided in an embodiment of the present application. As shown in Figure 11, the image encoding method includes S101 to S102.
S101, an encoder acquires an encoding unit.
The encoder is the above source apparatus 10 in Figure 6, or the video encoder 102 in the source apparatus 10, or the encoding and decoding apparatus in Figure 10, etc. The embodiment of the present application do not limit this. The encoding unit is an image block (i.e., the original block mentioned above) in an image to be processed. The encoding unit includes encoding blocks of multiple channels; the multiple channels includes the first channel which is any one of the multiple channels. For example, the size of the encoding unit can be $16\times2\times3$, then the size of an encoding block of the first channel of the encoding unit is $16\times2$.
S102, the encoder encodes an encoding block of the first channel in a first encoding mode.
The first encoding mode is a mode in which sample values in the encoding block of the first channel are encoded according to a first fixed-length code. The code length of the first fixed-length code is less than or equal to the image bit width of the image to be processed. The image bit width is used to characterize the number of bits required to store each sample in the image to be processed. The first fixed-length code can be pre-set in the encoder/decoder, or is determined by the encoder and then is written into the code stream header information and transmitted to the decoder.
It should be understood that the anti-expansion mode refers to a mode in which original pixel values in the encoding blocks of the multiple channels are directly encoded. Compared with other encoding modes, directly encoding the original pixel values usually consumes the larger number of bits. Therefore, the encoding block with the highest theoretical number of bits in the theoretical expansion rate usually originates from encoding blocks encoded in the anti-expansion mode. The embodiment of the present application reduces the theoretical number of bits of the encoding block with the maximum theoretical number of bits (i.e., the numerator in the fraction) by reducing the code length of the fixed-length code in the anti-expansion mode, thereby reducing the theoretical expansion rate. The theoretical expansion rate is low, and the speed difference in encoding substreams among the encoding blocks of individual channels is small. Therefore, when setting substream buffers, the substream buffers will not be set larger and spaces of the substream buffers also will not be wasted, thus achieving a reasonable configuration of substream buffers.
In an embodiment, if the image to be processed is an RGB image, the encoder can convert the RGB image to YUV format for encoding, or if the image to be processed is a YUV image, the encoder can also convert the YUV image to RGB format for encoding. The embodiments of the present application do not limit this.
Correspondingly, an embodiment of the present application also provides an image decoding method. Figure 12 is a schematic flow diagram of an image decoding method provided in the embodiment of the present application. As shown in Figure 12, the image decoding method includes S201 to S202.
S201, a decoder acquires a code stream obtained after an encoding unit is encoded.
The code stream obtained after the encoding unit is encoded can include multiple substreams obtained after the encoding blocks of the multiple channels are encoded, and the multiple substreams correspond one-to-one with the multiple channels. For example, the multiple substreams can includes a substream corresponding to the first channel (i.e. a substream obtained after the encoding block of the first channel is encoded).
S202, the decoder decodes a substream corresponding to the first channel in a first decoding mode.
The first decoding mode is a mode in which sample values are parsed from the substream corresponding to the first channel according to a first fixed-length code.
In an embodiment, S202 can also specifically include: when the first fixed-length code is equal to the image bit width, the decoder directly decodes the substream corresponding to the first channel in the first decoding mode; when the first fixed-length code is smaller than the image bit width, the decoder performs inverse quantization on the parsed pixel values in the encoding block of the first channel.
Wherein a quantization step size is 1<< (bitdepth-fixed_length). bitdepth represents the image bit width. fixed_length represents the length of the first fixed-length code. 1<< represents shifting left by one bit.

II. Fallback mode modification.

Optional implementation 1: if the current code stream buffer cannot meet the requirement that all channels of an encoding unit are encoded by using the anti-expansion mode, the anti-expansion mode is disabled at this time, and the encoder selects a mode other than the sample mode. At this time, even if encoding in other encoding modes will lead to expansion (the number of bits of a substream obtained after an encoding block of a certain channel is encoded is too large), the anti-expansion mode cannot be used.

Improved scheme 1: ensuring that the anti-expansion mode is enabled.

Embodiment 2:

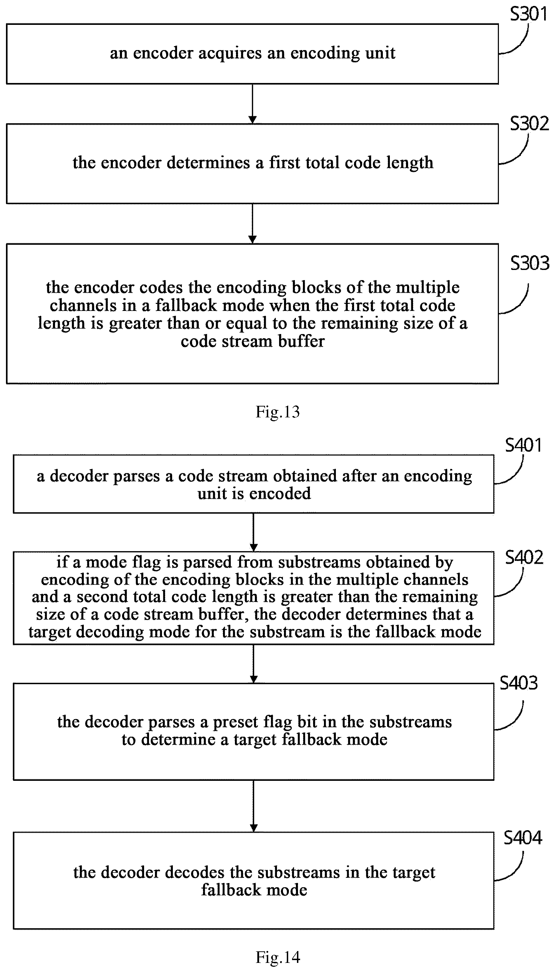

Figure 13 is a schematic flow diagram of another image encoding method provided in an embodiment of the present application. As shown in Figure 13, the image decoding method includes S301 to S302.

S301, an encoder acquires an encoding unit.

The encoding unit is an image block in an image to be processed, and the encoding unit includes encoding blocks of multiple channels.

S302, the encoder determines a first total code length.

The first total code length is a total code length of a first code stream obtained after each of the encoding blocks of the multiple channels is encoded in a target encoding mode corresponding to the encoding block. The target encoding mode includes a first encoding mode which is a mode in which pixel values in an encoding block are encoded according to a first fixed-length code, wherein the code length of the first fixed-length code is less than or equal to the image bit width of the image to be processed, and the image bit width is used to characterize the number of bits required to store each sample in the image to be processed.

For example, for each channel in the multiple channels, the encoder can determine the rate distortion cost of each encoding mode according to the above strategy 3, and determine a mode with the lowest rate distortion cost as the target encoding mode corresponding to an encoding block of the channel.

S303, the encoder encodes the encoding blocks of the multiple channels in a fallback mode when the first total code length is greater than or equal to the remaining size of a code stream buffer.

The fallback mode includes a first fallback mode and a second fallback mode. The first fallback mode refers to obtaining a block vector of a reference prediction block by using the IBC mode, and then calculating a residual and quantifying a residual, wherein the quantization step size is determined based on the remaining size of the code stream buffer and a target bits per pixel (BPP). The second fallback mode refers to quantifying the pixel points directly, wherein the quantization step size is determined based on the remaining size of the code stream buffer and the target BPP. The mode flag of the fallback mode is the same as that of the first encoding mode.

It should be understood that there may be a situation wherein the residual after encoding is too large when using other encoding modes for encoding, resulting in the too large number of bits of the encoding block using the other encoding modes. Instead, the anti-expansion mode uses the fixed-length code for encoding, and the total code length after encoding is fixed. By using the anti-expansion mode, the above situation wherein the residual is too large can be avoided. The embodiment of the present application provides a scheme for informing the decoder of the adopted encoding mode by determining the remaining size of the code stream buffer when the mode flag of the fallback mode is the same as that of the first encoding mode (anti-expansion mode), to ensure that the anti-expansion mode can always be selected, thereby reducing the theoretical expansion rate. The theoretical expansion rate is low, and the speed difference in encoding substreams among the encoding blocks of individual channels is small. Therefore, when setting substream buffers, the substream buffers will not be set larger and spaces of the substream buffers also will not be wasted, thus achieving a reasonable configuration of substream buffers.

In an embodiment, the image decoding method may further include: encoding, by the encoder, a mode flag in multiple substreams obtained by encoding of the encoding blocks of the multiple channels.

The mode flag is used to indicate an encoding mode used for each of the encoding blocks of the multiple channels, and the mode flag of the first encoding mode is the same as the mode flag of the fallback mode.

In an embodiment, the mode flag of the encoding blocks of the multiple channels can be encoded in the substreams obtained after the encoding blocks of the multiple channels are encoded. Taking the multiple channels includes the first channel and the first channel is any one of the multiple channels as an example, in this case, encoding, by the encoder, the mode flag in the multiple substreams obtained by encoding of the encoding blocks of the multiple channels, may include encoding a sub-mode flag in a substream obtained by encoding of the encoding block of the first channel.

The sub-mode flag is used to indicate the type of fallback mode used for the encoding block of the first channel, or to indicate the types of fallback mode used for the encoding blocks of the multiple channels. As described above, the fallback mode can include the first fallback mode and the second fallback mode, which will not be repeated here.

In an embodiment, similarly, taking the above first component as an example, in this case, encoding, by the encoder, the mode flag in the multiple substreams obtained by encoding of the encoding blocks of the multiple channels, may include encoding a first flag, a second flag, and a third flag in a substream obtained by encoding of an encoding block of the luminance channel.

The first flag is used to indicate that the encoding blocks of the multiple channels are encoded using the first encoding mode or the fallback mode; the second flag is used to indicate that the encoding blocks of the multiple channels are encoded using the target mode which is either of the first encoding mode and the fallback mode; when the second flag indicates that the target mode used for the encoding blocks of the multiple channels is the fallback mode, the third flag is used to indicate the type of fallback mode used for the encoding blocks of the multiple channels.

Correspondingly, an embodiment of the present application also provides two image decoding methods. Figure 14 is a schematic flow diagram of another image decoding method provided in the embodiment of the present application. As shown in Figure 14, the image decoding method includes S401 to S404.

S401, a decoder parses a code stream obtained after an encoding unit is encoded.

The encoding unit includes encoding blocks of multiple channels. The multiple channels includes the first channel which is any one of multiple channels.

S402, if a mode flag is parsed from substreams obtained by encoding of the encoding blocks in the multiple channels and a second total code length is greater than the remaining size of a code stream buffer, the decoder determines that a target decoding mode for the substream is the fallback mode.

The second total code length is a total code length of a first code stream obtained after of all of the encoding blocks of the multiple channels are encoded in the first encoding mode or the fallback mode.

S403, the decoder parses a preset flag bit in the substreams to determine a target fallback mode.

The target fallback mode is one type of fallback mode. The sub-mode flag is used to indicate the type of fallback mode adopted when the encoding blocks of multiple channels are encoded. The fallback mode includes the first fallback mode and the second fallback mode.

S404, the decoder decodes the substreams in the target fallback mode.

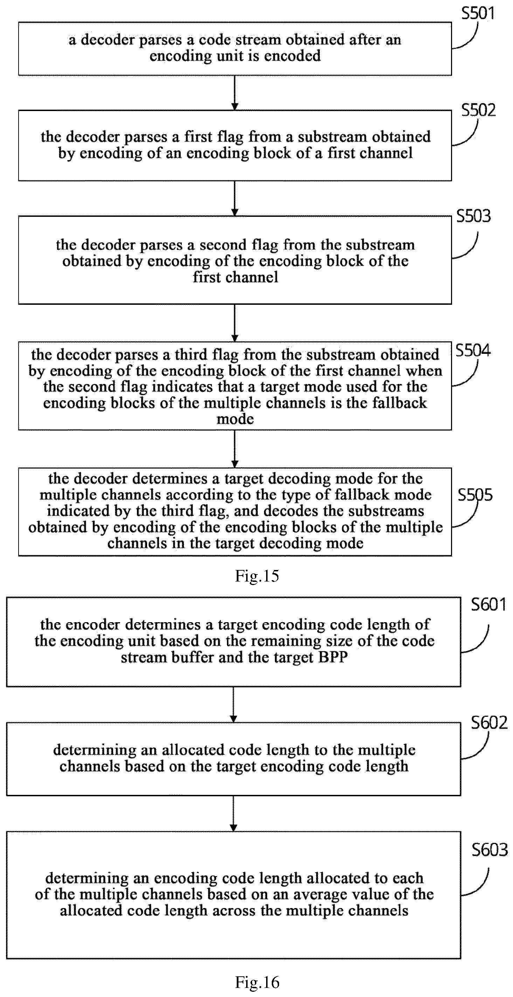

Figure 15 is a schematic flow diagram of yet another image decoding method provided in an embodiment of the present application. As shown in Figure 15, the image decoding method includes S501 to S504.

S501, a decoder parses a code stream obtained after an encoding unit is encoded.

S502, the decoder parses a first flag from a substream obtained by encoding of an encoding block of a first channel.

The first channel is any one of the multiple channels. The first flag can be referred to the description in the encoding method mentioned above, and will not be repeated here.

S503, the decoder parses a second flag from the substream obtained by encoding of the encoding block of the first channel.

The second flag can be referred to the description in the encoding method mentioned above, and will not be repeated here.

S504, the decoder parses a third flag from the substream obtained by encoding of the encoding block of the first channel when the second flag indicates that a target mode used for the encoding blocks of the multiple channels is the fallback mode.

The third flag can be referred to the description in the encoding method mentioned above, and will not be repeated here.

S505, the decoder determines a target decoding mode for the multiple channels according to the type of fallback mode indicated by the third flag, and decodes the substreams obtained by encoding of the encoding blocks of the multiple channels in the target decoding mode.

For example, the decoder can use the type of fallback mode indicated by the third flag as the target decoding mode for the multiple channels.

In an embodiment, the method can further includes: determining, by the decoder, a target decoding code length of the encoding unit based on the remaining size of a code stream buffer and the target bits per pixel BPP, wherein the target decoding code length is used to indicate a code length required to decode the code stream of the encoding unit; determining, by the decoder, an allocated code length to the multiple channels based on the decoding code length, wherein the allocated code length is used to indicate a code length required to decode residuals of the code stream of the encoding blocks of multiple channels; determining, by the decoder, a decoding code length allocated to each of the multiple channels based on an average value of the allocated code length across the multiple channels.

Based on the understanding of the above Embodiment 2, taking the multiple channels including a luminance (Y) channel, a first chrominance (U) channel, and a second chrominance (V) channel as an example, two main schemes included in the improved scheme 1 for the fallback mode are described:

Scheme 1:

Encoder: the encoder controls that the bit consumption cost of encoding in the anti-expansion mode (sample mode) is the highest at any time, and the encoder cannot choose a mode with a bit consumption cost greater than the sample mode. Therefore, an encoding mode is required in all components, even in the fallback mode, not only a substream corresponding to the Y channel (a first substream) needs an encoding mode, but also substreams corresponding to the U/V channel (a second and a third substreams) need encoding modes. The fallback mode codeword is remained the same as the sample mode codeword. Specific types of the fallback mode (the first fallback mode and the second fallback mode) can be encoded based on a certain channel.

Decoder: firstly, parsing the encoding modes for the three channels; when all of the encoding modes for three channels Y/U/V are the target encoding modes selected based on the rate distortion cost, then determining the remaining size of the code stream buffer to determine whether the code stream buffer allows all of the three channels to be decoded in their respective target encoding modes. If the code stream buffer does not allow all of the three channels to be decoded in their respective target encoding modes, the current decoding mode is the fallback mode. If the current decoding mode is the fallback mode, a flag bit can be parsed based on a certain component to indicate whether the current fallback mode belongs to the first fallback mode or the second fallback mode (the three channels use the same fallback mode). Therefore, when there is a channel in the decoder that does not select the anti-expansion mode, the current CU will not select the fallback mode.

Scheme 2:

Encoder: the encoder controls that the bit consumption cost of encoding in the anti-expansion mode (raw value mode) is the highest at any time, and the encoder cannot select a mode with a bit consumption cost greater than the raw value. The sample mode and the fallback mode still use the same mode flag (i.e. the first flag mentioned above), and when encoding the anti-expansion mode and the fallback mode, an additional flag (i.e. the second flag mentioned above) is encoded to indicate that the current encoding mode is one of the anti-expansion mode or the fallback mode. When the additional flag indicates that the current encoding mode is the fallback mode, a flag bit (i.e. the third flag mentioned above) is further encoded to indicate that the current fallback mode is one of the first fallback mode or the second fallback mode. When each of the multiple channels selects the fallback mode, the types of fallback modes for the multiple channels remain consistent. When there is a channel for which the anti-expansion mode is selected, the mode flag is encoded in a substream corresponding to this channel, but there is no need to encode the flag (i.e. the second flag mentioned above) for indicating whether the current encoding mode is the fallback mode.

Decoder: parsing the mode flag from the code stream; if the mode flag is shared by the anti-expansion mode and the fallback mode, continuing to parse a flag (i.e. the second flag mentioned above) to indicate whether the current mode is the fallback mode; if the current mode is the fallback mode, then further paring a flag (i.e. the third flag mentioned above) to indicate that the current fallback mode is one of the first fallback mode and the second fallback mode. When the type of fallback mode for one channel is parsed, the type of fallback mode used for other channels is the same as the type of fallback mode for this channel. For channels that do not adopt the fallback mode, respective modes for the channels are parsed respectively.

As described above, the improved scheme 1 can reduce an upper limit of the numerator in the expansion rate formula with the above Embodiment 2. In an embodiment, for the fallback mode, a lower limit of the denominator in the expansion rate formula can also be increased. This will be described in the following based on the optional implementation 2 and the improved scheme 2.

Optional implementation 2: when determining to use the fallback mode for encoding, the encoder will give a target BPP. In the fallback mode, the sum of bits of the substreams corresponding to the encoding blocks of the three channels must be less than or equal to the target BPP. Therefore, in code rate allocating code, common information (block vectors and mode flag) is encoded on the luminance channel. The remaining code length obtained after subtracting a code length occupied by the common information from an allocated code length, is used to encode the residuals of the multiple channels. Therefore, it is necessary to allocate the remaining code length. The allocation is performed by dividing the remaining code length by the number of pixels of multiple channels (that is, a code length allocated to each channel needs to be an integer multiple of the number of pixels of the encoding unit). If the remaining code length is not divisible by the number of pixels of multiple channels, the indivisible part of the code length will be allocated to the luminance channel. When the remaining code length is small, the remaining code length is not divisible by the number of pixels of the multiple channels, and no code length can be allocated to the substreams corresponding to the first and second chrominance channels, resulting in the smaller number of bits of the corresponding substreams and a higher expansion rate.

Improved scheme 2: allocating the remaining code length evenly to the multiple channels based on the number of bits to improve allocation accuracy.

Embodiment 3:

Figure 16 is a schematic flow diagram of yet another image encoding method provided in an embodiment of the present application. As shown in Figure 16, based on the S301 to S303 above, the image encoding method can further include S601 to S603.

S601, the encoder determines a target encoding code length of the encoding unit based on the remaining size of the code stream buffer and the target BPP.

The target encoding code length is used to indicate a code length required for encoding the encoding unit. The target BPP can be obtained by the encoder, such as receiving the target BPP input by a user.

S602, determining an allocated code length to the multiple channels based on the target encoding code length.

The allocated code length is used to indicate a code length required to encode residuals of the encoding blocks of the multiple channels.

For example, as described above, the encoder can subtract the code length occupied by common information from the target encoding code length, to obtain the allocated code length to multiple channels.

S603, determining an encoding code length allocated to each of the multiple channels based on an average value of the allocated code length across the multiple channels.

In an embodiment, the encoder can also encode the block vectors and mode flag in the substreams corresponding to the multiple channels.

The mode flag can be referred to the above, and will not be repeated here. The block vector can be referred to the below description for the IBC mode, which will not be repeated here.

In an embodiment, if the bits allocated to a channel is not divisible by the number of pixels of the channel when encoding the residual, that is, not the residuals of all of pixels can be encoded by using the fixed-length code, the encoder can group the pixels of the channel and encode only one residual value per group.

It should be understood that when the remaining code length is small, the current code length allocation mode based on the number of pixels in the encoding unit may result in that no code length can be allocated to the chrominance channel, thus leading to the smaller number of bits of the encoding block of the chrominance channel after being encoded and an increase in the expansion rate. The image encoding method provided in the embodiments of the present application can perform allocation based on the number of bits of the allocated code length as an allocation unit, instead of based on the number of pixels as an allocation unit. Each channel can be assigned a code length for encoding, reducing the theoretical expansion rate.

Correspondingly, an embodiment of the present application also provides an image decoding method, based on above S401 to S404 or S501 to S505, the method can further includes: determining, by the decoder, a target decoding code length of the encoding unit based on the remaining size of the code stream buffer and the target bits per pixel BPP, wherein the target decoding code length is used to indicate a code length required to decode the code stream of the encoding unit; determining, by the decoder, the allocated code length to the multiple channels based on the decoding code length, wherein the allocate code length is used to indicate a code length required to decode the residuals of the code stream of the encoding blocks of multiple channels; determining, by the decoder, a decoding code length allocated to each of the multiple channels based on the average value of the allocated code length across the multiple channels.

III. Frame intra block copy (IBC) mode modification.

Optional implementation: a mode identifier is at CU level, and BV (Block Vector) is also at CU level, both the mode identifier and BV are transmitted in luminance.

Improved scheme: the mode identifier is modified to be at CB level, while BV remains at CU level, and the identifier is transmitted in all channels and BV is transmitted in all channels.

Embodiment 4:

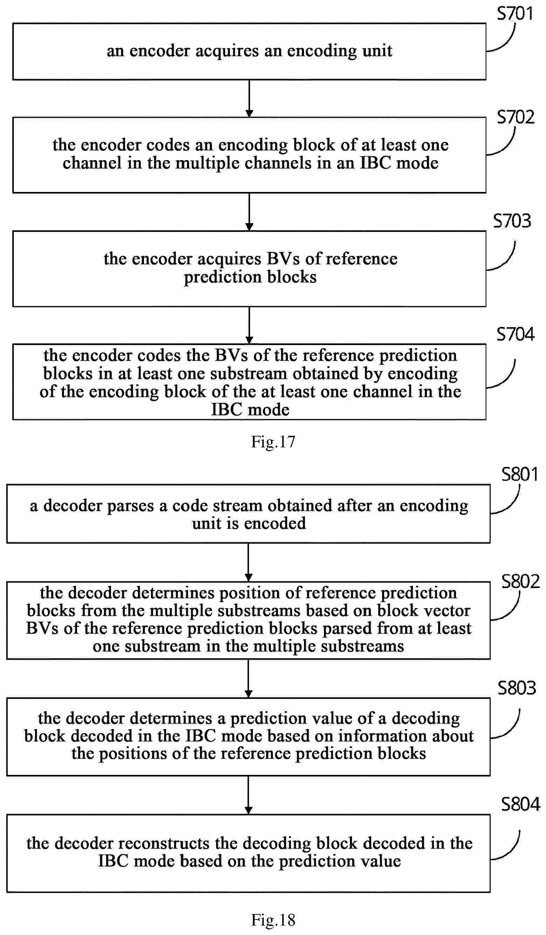

Figure 17 is a schematic flow diagram of yet another image encoding method provided in an embodiment of the present application. As shown in Figure 17, the method includes S701 to S704.

S701, an encoder acquires an encoding unit.

The encoding unit includes encoding blocks of multiple channels.

S702, the encoder encodes an encoding block of at least one channel in the multiple channels in an IBC mode.

In an embodiment, S702 may specifically include: determining, by the encoder, a target encoding mode for the at least one channel using a rate distortion optimization strategy.

The target encoding mode includes the IBC mode. The rate distortion optimization strategy can be referred to the strategy 3 mentioned above, and will not be repeated here.

S703, the encoder acquires BVs of reference prediction blocks.

The BVs of the reference prediction blocks are used to indicate the positions of the reference prediction blocks in the encoded image block. The reference prediction blocks are used to characterize a prediction value of an encoding block encoded in the IBC mode.

S704, the encoder encodes the BVs of the reference prediction blocks in at least one substream obtained by encoding of the encoding block of the at least one channel in the IBC mode.

In an embodiment, for the BVs of the reference prediction blocks of an encoding block of each channel, all of the BVs can be encoded in a substream corresponding to a luminance channel.

In an embodiment, for the BVs of the reference prediction blocks of an encoding block of each channel, all of the BVs can also be encoded in a substream corresponding to a certain chrominance channel (such as the first chrominance channel or the second chrominance channel), or the number of BVs can be allocated equally in and be encoded in substreams corresponding to two chrominance channels. If the number of BVs cannot be allocated equally, the encoder can encode one more BV in a substream corresponding to any one of the two chrominance channels than in a substream corresponding the other chrominance channel.

In an embodiment, for the BVs of the reference prediction blocks of an encoding block of each channel, the BVs can also be allocated equally in and encoded in substreams corresponding to encoding blocks of different channels. If the BVs cannot be allocated equally in substreams corresponding to encoding blocks of different channels, the encoder can allocate the BVs according to a preset ratio. For example, taking the number of BVs being 8 as an example, the preset ratio can be Y channel: U channel: V channel=2:3:3, or Y channel: U channel: V channel=4:2:2, etc. The embodiments of the present application do not limit the specific value of the preset ratio. In this case, the above S602 can specifically include: encoding the encoding blocks of the multiple channels in the IBC mode; the above S704 can specifically include: encoding the BVs of the reference prediction blocks in substreams obtained by encoding of the encoding blocks of all channels in the multiple channels in the IBC mode.

In an embodiment, there are multiple BVs of the reference prediction blocks. Encoding the BVs of the reference prediction blocks in the substreams obtained by encoding of the encoding blocks of all channels in the multiple channels in the IBC mode mentioned above may include: encoding the BVs of the reference prediction blocks in the code stream obtained by encoding of the encoding blocks of all channels in the multiple channels in the IBC mode according to a preset ratio.

It should be understood that the number of bits of a substream corresponding to the luminance channel is usually larger, while the number of bits in a substream corresponding to the chrominance channel is usually smaller. In the embodiment of the present application, by transmitting the BVs of the reference prediction blocks in the substream corresponding to the encoding block of at least one channel when encoding in the IBC mode, transmission data can be increased in the substream corresponding to the chrominance channel with the smaller number of bits, thereby improving the denominator in the above formula for calculating the theoretical expansion rate and thus reducing the theoretical expansion rate.

In an embodiment, the CU will generate header information during the encoding process, and the header information of the CU can also be allocated and encoded in the substream according to the above method of allocating the BVs.

Correspondingly, an embodiment of the present application also provides an image decoding method. Figure 18 is a schematic flow diagram of yet another image decoding method provided in the embodiment of the present application. As shown in Figure 18, the method includes S801 to S804.

S801, a decoder parses a code stream obtained after an encoding unit is encoded.

The encoding unit includes encoding blocks of multiple channels; the code stream includes multiple substreams obtained after the encoding blocks of the multiple channels are encoded, wherein the multiple substreams correspond one-to-one with the multiple channels.

S802, the decoder determines position of reference prediction blocks from the multiple substreams based on block vector BVs of the reference prediction blocks parsed from at least one substream in the multiple substreams.

S803, the decoder determines a prediction value of a decoding block decoded in the IBC mode based on information about the positions of the reference prediction blocks.

S804, the decoder reconstructs the decoding block decoded in the IBC mode based on the prediction value.

S803 and S804 can be referred to the description for the above video encoding and decoding system, and will not be further elaborated here.

In an embodiment, for the BVs of the reference prediction blocks of an encoding block of each channel, all of the BVs can be parsed by the decoder from a substream corresponding to the luminance channel.

In an embodiment, for the BVs of the reference prediction blocks of an encoding block of each channel, all of the BVs can also be parsed from a substream corresponding to a certain chrominance channel (such as the first chrominance channel or the second chrominance channel), or the number of BVs can be allocated equally in and parsed from substreams corresponding to two chrominance channels. If the number of BVs cannot be allocated equally, the decoder can decode one more BV from a substream corresponding to any one of the two chrominance channels than from a substream corresponding the other chrominance channel.

In an embodiment, for the BVs of the reference prediction blocks of an encoding block of each channel, the BVs can also be allocated equally in and parsed from substreams corresponding to encoding blocks of different channels. If the BVs cannot be allocated equally, the decoder can allocate the BVs according to a preset ratio. For example, taking the number of BVs being 8 as an example, the preset ratio can be Y channel: U channel: V channel=2:3:3, or Y channel: U channel: V channel=4:2:2, etc. The embodiments of the present application do not limit the specific value of the preset ratio.

In an embodiment, the encoding block encoded in the IBC mode includes encoding blocks of at least two channels; the encoding blocks of the at least two channels share the BVs of the reference prediction blocks.

In an embodiment, the method may further include: when parsing an identifier of the IBC mode from any one of the multiple substreams, the decoder determines that the target decoding mode corresponding to the multiple substreams is the IBC mode.

In an embodiment, the method may further include: by the decoder, parsing an identifier of the IBC mode from the multiple substreams one by one, and determining that the target decoding mode corresponding to a substream from which the identifier of the IBC mode is parsed, in the multiple substreams is the IBC mode.

Based on the understanding of the above Embodiment 4, taking the multiple channels including the luminance (Y) channel, the first chrominance (U) channel, and the second chrominance (V) channel as an example, two main schemes included in the improved scheme for the IBC mode are described:

Scheme 1:

Encoder:

Step 1: acquiring the reference prediction blocks based on the multiple channels. That is, for a multi-channel encoding unit, the multi-channel at a certain position in the search area is used as the reference prediction block for the current multi-channel encoding unit, and this position is denoted as BV, that is, multiple channels share one BV. If the input image is YUV400, there is only one channel, otherwise there are three channels. After obtaining the prediction block, the residuals for each channel are calculated, and (transformation) quantization and inverse quantization (inverse transformation) are performed on the residuals, then the reconstruction is completed.

Step 2, encoding auxiliary information (including encoding block complexity level and other information) and mode information in the luminance channel, and encoding a quantized coefficient of the luminance channel.

Step 3, if there is a chrominance channel, encoding auxiliary information (including encoding block complexity and other information) in the chrominance channel, as well as encoding a quantized coefficient of the chrominance channel.

3.1, for the BVs of the reference prediction blocks of each encoding unit, all of the BVs can be encoded on the luminance channel.

3.2, for the BVs of the reference prediction blocks of each encoding unit, all of the BVs can also be encoded in a certain chrominance channel, or the BVs can be allocated equally in and be encoded in two chrominance channels. If the BVs cannot be allocated equally, then some more BVs are encoded in any one of the two chrominance channels than in the other chrominance channel.

3.3, for the BVs of the reference prediction blocks of each encoding unit, the BVs can also be allocated equally in and encoded in different components respectively. If the BVs cannot be allocated equally, the BVs will be allocated according to the preset ratio.

Decoder:

Step 1, parsing the auxiliary information and mode information of the encoding block of the luminance channel, and paring the quantized coefficient in the luminance channel.

Step 2, if there is a chrominance channel, parsing the auxiliary information of the encoding block of the U channel; if the luminance channel prediction mode is the IBC mode, then the prediction mode for the current chrominance channel does not need to be parsed and defaults to the IBC mode; paring the quantized coefficient in the current chrominance channel.

Step 3: for parsing of the BVs, which is consistent with the encoder, that is:

3.1, for the BVs of the reference prediction blocks of each parsing unit, all of the BVs can be parsing from a luminance channel.

3.2, for the BVs of the reference prediction blocks of each parsing unit, all of the BVs can also be parsed in a certain chrominance channel, or the BVs can be allocated equally in and parsed from two chrominance channels. If the BVs cannot be allocated equally, some more BVs can be parsed from any one of the two chrominance channels than from the other chrominance channel.

3.3, for the BVs of the reference prediction blocks of each parsing unit, the BVs can also be allocated equally in and parsed from different components respectively. If the BVs cannot be allocated equally, the BVs are allocated according to a preset ratio.

Step 4, obtaining a prediction value for each encoding block in each channel based on the BVs shared by the three channels; performing inverse quantization (inverse transformation) on the coefficient parsed form each channel to obtain residual values. ; based on the residual values and the prediction value, achieving the reconstruction of each encoding block.

Scheme 2:

Encoder:

Step 1, for the same encoding unit, i.e. for three channels, each IBC mode only needs to be trained to obtain one set of BVs, which can be obtained based on the search area and original values of the three channels, based on the search area and an original value of one of the three channels, or calculated based on the search area and original values of any two of the three channels.

Step 2, for an encoding block of each channel, determining the target encoding mode by using the rate distortion cost, wherein the BVs of the three channels in the IBC mode uses the BVs calculated in step 1. It is allowed that after one certain component selects the IBC mode, other components do not select the IBC mode.

Step 3, for the encoding block of each channel, it is necessary to encode an optimal mode for the encoding block itself. If the target mode for one or more channels is selected as the IBC mode, then BVs can be encoded based on one certain channel selecting the IBC mode, or can be encoded based on allocating the number of BVs equally between two channels selecting the IBC mode, or based on allocating the number of BVs equally among all channels selecting the IBC mode. When the number of BVs is not divisible, the number of BVs will be allocated according to the preset ratio.

Decoder:

One target mode is parsed for each channel. If it is parsed that the target mode for one or more channels is selected as the IBC mode (only the same IBC mode can be selected), then the allocation scheme for BVs parsing is consistent with that for BVs encoding at the encoder.

IV. Coefficient grouping.

Optional implementation: as shown in the flow diagram in Figure 1, there may be a residual skip mode during the encoding process. If the encoder selects this skip mode during encoding, the residual does not need to be encoded during encoding, and only 1-bit data needs to be encoded to represent the residual skip.

Improved scheme: grouping processing coefficients (residual coefficients, and/or transformation coefficients).

Embodiment 5:

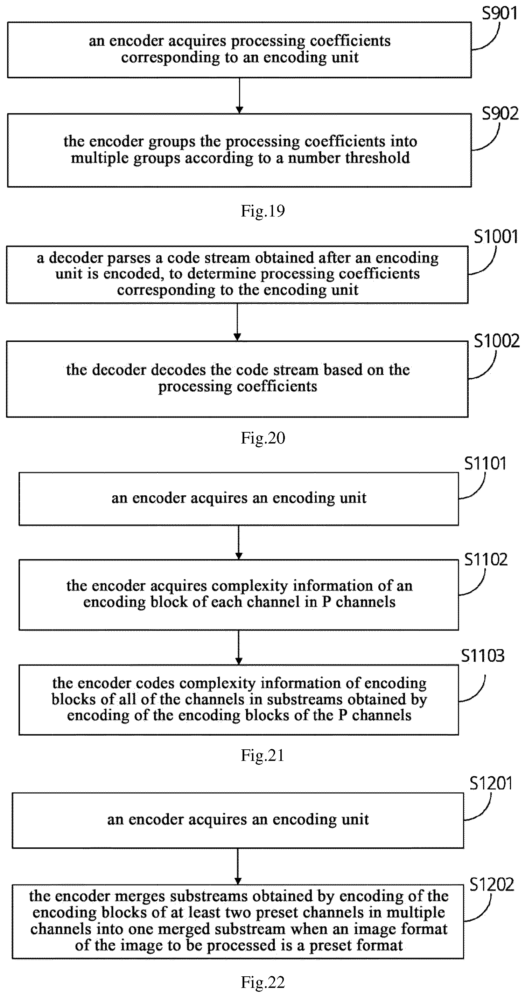

Figure 19 is a schematic flow diagram of yet another image encoding method provided in an embodiment of the present application. As shown in Figure 19, the image encoding method includes S901 to S902.

S901, an encoder acquires processing coefficients corresponding to an encoding unit.

The processing coefficients include one or more of residual coefficients and transformation coefficients.

S902, the encoder groups the processing coefficients into multiple groups according to a number threshold.

The number threshold can be preset in the encoder. The number threshold depends on the size of an encoding block. For example, for a $16 \times 2$ encoding block, the number threshold can be set to 16. The number of processing coefficients in each group of processing coefficients in the multiple groups of processing coefficients is less than or equal to the number threshold.

It should be understood that, compared with the residual skip mode in the optional implementation, the image encoding method provided in the embodiment of the present application can group the processing coefficients during encoding, and each group of processing coefficients after grouping needs to be added with header information of the group of processing coefficients during transmission, to describe the details of the group of processing coefficients, which increases the denominator in the formula for calculating the theoretical expansion rate and reduces the theoretical expansion rate compared with the current implementation of using 1-bit data to represent the residual skip.

Correspondingly, an embodiment of the present application also provides an image decoding method. Figure 20 is a schematic flow diagram of yet another image decoding method provided in the embodiment of the present application. As shown in Figure 20, the image decoding method includes S1001 to S1002.

S1001, a decoder parses a code stream obtained after an encoding unit is encoded, to determine processing coefficients corresponding to the encoding unit.

The processing coefficients include one or more of residual coefficients and transformation coefficients; the processing coefficients include multiple groups of processing coefficients; the number of processing coefficients in each group is less than or equal to the number threshold.

S1002, the decoder decodes the code stream based on the processing coefficients.

S1002 can be referred to the description regarding the video encoding and decoding system described above, and will not be further elaborated here.

V. Complexity transmission.

Optional implementation: an encoding unit includes an encoding block of the luminance channel, an encoding block of the first chrominance channel, and an encoding block of the second chrominance channel. A substream corresponding to the encoding block of the luminance channel is the first substream, a substream corresponding to the encoding block of the first chrominance channel is the second substream, and a substream corresponding to the encoding block of the second chrominance channel is the third substream. The complexity level of the luminance channel is transmitted using 1 bit or 3 bits in the first substream, the average value across two chrominance channels is transmitted using 1 bit or 3 bits in the second substream, and no complexity level is transmitted in the third substream.

For example, the method of calculating a CU level complexity is as follows:

```
if (image_format == '000') {   /* YUV400 */
CuComplexityLevel = ComplexityLevel[0]
} else if (image_format == '001') {   /* YUV420 */
CuComplexityLevel = ComplexityDivide3Table[ComplexityLevel[1] + (ComplexityLevel[0] << 1)]
} else if (image_format == '010') {   /* YUV422 */
CuComplexityLevel = (ComplexityLevel[0] + ComplexityLevel[1]) >> 1
} else if (image_format == '011' || image_format == '100') {   /* YUV444 or RGB444 */
CuComplexityLevel = ComplexityDivide3Table[ComplexityLevel[0] + (ComplexityLevel[1] << 1)]
}
```

BiasInit is obtained by looking up a table according to the complexity level of the luminance channel ComplexityLevel[0] and the complexity level of the chrominance channel ComplexityLevel[1]. Then, the quantization parameter Qp[0] of the luminance channel and the quantization parameters Qp[1] and Qp[2] of the two chrominance channels are calculated.

The table for lookup can be referred to Table 1 below, and will not be repeated here.

Taking the first substream as an example, the specific implementation of the first substream is as follows:

```
complexity_level_flag[0]        u(1)
if (ComplexityLevelFlag[0] == 0) {
 delta_level[0]      u(2)
 if (delta_level[0] >= PrevComplexityLevel) {
        ComplexityLevel[0] = DeltaLevel[0] + 1
 } else {
        ComplexityLevel[0] = DeltaLevel[0]
 }
} else {
 ComplexityLevel[0] = PrevComplexityLevel
}
PrevComplexityLevel = ComplexityLevel[0]
```

wherein complexity_level_flag[0] is an update flag of the complexity level of the luminance channel, and is a binary variable, wherein the value of '1' indicates that the complexity level of the luminance channel of the encoding unit needs to be updated; the value of '0' indicates that the complexity level of the luminance channel of the encoding unit does not need to be updated. The value of ComplexityLevelFlag[0] is equal to the value of the value of complexity_level_flag[0]. delta_level[0] is the variation of complexity level of the luminance channel, and is a 2-digit unsigned integer which determines the variation of complexity level of the luminance channel. The value of DeltaLevel[0] is equal to the value of delta_level[0]. If there is no delta_level[0] in the code stream, then the value of DeltaLevel[0] is equal to 0. PrevComplexityLevel indicates a complexity level of the luminance channel of the previous encoding unit; ComplexityLevel[0] indicates the complexity level of the luminance channel.

Improved scheme: adding the complexity information in the third substream.

Embodiment 6:

Figure 21 is a schematic flow diagram of yet another image encoding method provided in the embodiment of the present application. As shown in Figure 21, the image encoding method includes S1101 to S1102.

S1101, an encoder acquires an encoding unit.

The encoding unit includes encoding blocks of P channels, wherein P is an integer greater than or equal to 2.

S1102, the encoder acquires complexity information of an encoding block of each channel in P channels.

The complexity information is used to characterize the degree of difference in pixel values of the encoding block of each channel. For example, taking P channels including a luminance channel, a first chrominance channel, and a second chrominance channel as an example, the complexity information of an encoding block of the luminance channel is used to characterize the degree of difference in pixel values of the encoding block of the luminance channel; the complexity information of an encoding block of the first chrominance channel is used to characterize the degree of difference in pixel values of the encoding block of the first chrominance channel; the complexity information of an encoding block of the second chrominance channel is used to characterize the degree of difference in pixel values of the encoding block of the second chrominance channel.

S1103, the encoder encodes complexity information of encoding blocks of all of the channels in substreams obtained by encoding of the encoding blocks of the P channels.

In an embodiment, S1103 can specifically include: encoding, by the encoder, the complexity levels of the encoding blocks of all of the channels in the substreams obtained by encoding of the encoding blocks of the P channels, respectively.

Exemplarily, taking the second substream corresponding to the first chrominance component as an example, the specific implementation of the second substream is as follows:

```
complexity_level_flag[1]
if (ComplexityLevelFlag[1] == 1) {
 delta_level[1]
 if (delta_level[1] >= ComplexityLevel[0]) {
        ComplexityLevel[1] = DeltaLevel[1] + 1
 } else {
        ComplexityLevel[1] = DeltaLevel[1]
 }
} else {
 ComplexityLevel[1] = ComplexityLevel[0]
}
```

wherein complexity_level_flag[1] indicates an update flag of the complexity level of the first chrominance channel, which is a binary variable, wherein the value of '1' indicates that the complexity level of an encoding block of the first chrominance channel of the encoding unit is consistent with the complexity level of an encoding block of the luminance channel; the value of '0' indicates that the complexity level of the encoding block of the first chrominance channel of the encoding unit is inconsistent with the complexity level of the encoding block of the luminance channel. The value of ComplexityLevelFlag[1] is equal to the value of complexity_level_flag[1]. delta_level[1] indicates the variation of complexity level of the first chrominance channel, and is a 2-digit unsigned integer that determines the variation of the complexity level of the encoding block of the first chrominance channel. The value of DeltaLevel[1] is equal to the value of delta_level[1]. If there is no delta_level[1] in the code stream, then the value of DeltaLevel[1] is equal to 0. ComplexityLevel[1] indicates the complexity level of the encoding block of the first chrominance channel.

Exemplarily, taking the third substream corresponding to the second chrominance component as an example, the specific implementation of the third substream is as follows:

```
complexity_level_flag[2]
if (ComplexityLevelFlag[2] == 1) {
 delta_level[2]
 if (delta_level[2] >= ComplexityLevel[1]) {
        ComplexityLevel[2] = DeltaLevel[2] + 1
 } else {
        ComplexityLevel[2] = DeltaLevel[2]
 }
} else {
 ComplexityLevel[2] = ComplexityLevel[1]
}
```

wherein complexity_level_flag[2] indicates an update flag of the complexity level of the second chrominance channel, and is a binary variable, wherein the value of '1' indicates that the complexity level of an encoding block of the second chrominance channel of the encoding unit is consistent with the complexity level of an encoding block of the first chrominance channel; the value of '0' indicates that the complexity level of the encoding block of the second chrominance channel of the encoding unit is inconsistent with the complexity level of the encoding block of the first chrominance. The value of ComplexityLevelFlag[2] is equal to the value of complexity_level_flag[2]. delta_level[2] indicates the variation of the complexity level of the second chrominance channel, and is a 2-digit unsigned integer that determines the variation of the complexity level of the encoding block of the second chrominance channel. The value of DeltaLevel[2] is equal to the value of delta_level[2]. If there is no delta_level[2] in the code stream, then the value of DeltaLevel[2] is equal to 0. ComplexityLevel[2] indicates the complexity level of the encoding block of the second chrominance channel.

In an embodiment, the complexity information includes the complexity level and a first reference coefficient, and the first reference coefficient is used to characterize the proportional relationship among complexity levels of encoding blocks of different channels. S1103 can specifically include: encoding, by the encoder, complexity levels of encoding blocks of Q channels in the P channels in substreams obtained by encoding of the encoding blocks of the Q channels, respectively; Q is an integer less than P; the encoder encodes the first reference coefficient in substreams obtained by encoding of the encoding blocks of P-Q channels in P channels.

For example, taking P channels including a luminance channel, a first chrominance channel, and a second chrominance channel as an example, the complexity information of an encoding block of the luminance channel is the complexity level of the encoding block of the luminance channel; the complexity information of an encoding block of the first chrominance channel is the complexity level of the encoding block of the first chrominance channel; the complexity information of an encoding block of the second chrominance channel is the reference coefficient; the reference coefficient is used to characterize the proportional relationship between the complexity level of the encoding block of the first chrominance channel and the complexity level of the encoding block of the second chrominance channel.

For example, the meaning of assignment of the above variable complexity_level_flag[2] is changed, wherein the value of '1' indicates that the complexity level of the encoding block of the second chrominance channel of the encoding unit is higher than the complexity level of the encoding block of the first chrominance channel; the value of '0' indicates that the complexity level of the encoding block of the second chrominance channel of the encoding unit is lower than or equal to the complexity level of the encoding block of the first chrominance channel. The value of ComplexityLevelFlag[2] is equal to the value of complexity_level_flag[2].

In an embodiment, the complexity information includes the complexity level, a reference complexity level, and a second reference coefficient; the reference complexity level includes any of a first complexity level, a second complexity level and a third complexity level; the first complexity level is the maximum value among the complexity levels of the encoding blocks of P-Q channels in P channels; Q is an integer less than P; the second complexity level is the minimum value among the complexity levels of the encoding blocks of P-Q channels in P channels; the third complexity level is the average value of the complexity levels of the encoding blocks of P-Q channels in P channels; the second reference coefficient is used to characterize the size relationship and/or proportional relationship among the complexity levels of the encoding blocks of P-Q channels in P channels. In this case, the above S1103 can specifically include: encoding, by the encoder, the complexity levels of the encoding blocks of Q channels in P channels in substreams obtained by encoding of the encoding blocks of Q channels, respectively; encoding, by the encoder, the reference complexity level and the second reference coefficient in substreams obtained by encoding of the encoding blocks of P-Q channels in P channels.

For example, taking P channels including a luminance channel, a first chrominance channel, and a second chrominance channel as an example, the complexity information of an encoding block of the luminance channel is the complexity level of the encoding block of the luminance channel; the complexity information of an encoding block of the first chrominance channel is the reference complexity level; the reference complexity level includes any of the first complexity level, the second complexity level and the third complexity level; the first complexity level is the maximum value between the complexity level of the encoding block of the first chrominance channel and the complexity level of an encoding block of the second chrominance channel; the second complexity level is the minimum value between the complexity level of the encoding block of the first chrominance channel and the complexity level of the encoding block of the second chrominance channel; the third complexity level is the average value between the complexity level of the encoding block of the first chrominance channel and the complexity level of the encoding block of the second chrominance channel; the complexity information of the encoding block of the second chrominance channel is the reference coefficient; the reference coefficient is used to characterize the size relationship and/or proportional relationship between the complexity level of the encoding block of the first chrominance channel and the complexity level of the encoding block of the second chrominance channel.

It should be understood that in the optional implementation, no complexity information is transmitted in the third substream corresponding to the encoding block of the second chrominance channel. The image encoding method provided in the embodiment of the present application increases the number of bits in a substream with the smaller number of bits by adding the encoding complexity information in the third substream, thereby improving the denominator in the formula for calculating the theoretical expansion rate and reducing the theoretical expansion rate.

Correspondingly, an embodiment of the present application also provides an image decoding method. Figure 2 is yet another image decoding method provided in the embodiment of the present application. As shown in Figure 2, the decoding method includes S1201 to S1204.

S1201, a decoder parses a code stream obtained after an encoding unit is encoded.

The encoding unit includes encoding blocks of P channels, P is an integer greater than or equal to 2; the code stream includes multiple substreams obtained after the encoding blocks of the P channels are encoded, and the multiple substreams correspond one-to-one with the P channels.

S1202, the decoder parses complexity information of an encoding block of each channel from substreams obtained by encoding of the encoding blocks of P channels.

In an embodiment, S1202 can specifically include: parses, by the decoder, the complexity levels of the encoding blocks of all of the channels from the substreams obtained by encoding of the encoding blocks of P channels, respectively.

S1203, based on the complexity information of the encoding block of each channel, the decoder determines a quantization parameter of the encoding block of the channel.

S1204, the decoder decodes the code stream based on the quantization parameter of the encoding block of each channel.

In an embodiment, when the complexity levels of the channels are transmitted in all of the substreams corresponding to the channels, the complexity level at CU level (CuComplexityLevel) can be calculated according to the following process:

```
if (image_format == '000') {   /* YUV400 */
CuComplexityLevel = ComplexityLevel[0]
} else if (image_format == '001') {   /* YUV420 */
CuComplexityLevel = ComplexityDivide3Table[((ComplexityLevel[0] << 2) + ComplexityLevel[1] + ComplexityLevel[2]) :
1]
} else if (image_format == '010') {   /* YUV422 */
CuComplexityLevel = ((ComplexityLevel[0] << 1) + ComplexityLevel[1] + ComplexityLevel[2]) >> 2
} else if (image_format == '011' || image_format == '100') {   /* YUV444 or RGB444 */
CuComplexityLevel = ComplexityDivide3Table[ComplexityLevel[0] + ComplexityLevel[1] + ComplexityLevel[2]]
}
```

wherein ComplexityDivide3Table is defined as: ComplexityDivide3Table = { 0, 0, 0, 1, 1, 1, 2, 2, 2, 3, 3, 3, 4 }; image_format represents an image format of an image to be processed wherein the encoding unit is located.

In an embodiment, as described above, the complexity information includes the complexity level and a first reference coefficient; the first reference coefficient is used to characterize the proportional relationship among the complexity levels of encoding blocks of different channels. In this case, the above S1202 can specifically include: parsing, by the decoder, complexity levels of encoding blocks of Q channels in P channels respectively from substreams obtained by encoding of the encoding blocks of Q channels, wherein Q is an integer less than P; parsing, by the decoder, the first reference coefficient from substreams obtained by encoding of the encoding blocks of P-Q channels in P channels; determining, by the decoder, the complexity levels of the encoding blocks of P-Q channels based on the first reference coefficient and the complexity levels of the encoding blocks of Q channels.

In an embodiment, when there is a substream in which no complexity level is transmitted (i.e. the size relationship is transmitted in the third substream as mentioned above), the complexity level at CU level (CuComplexityLevel) can be calculated according to the following process:

```
if (image_format == '000') {   /* YUV400 */
CuComplexityLevel = ComplexityLevel[0]
} else if (image_format == '001') {   /* YUV420 */
CuComplexityLevel = ComplexityDivide3Table[ChromaComplexityLevel + (ComplexityLevel[0] << 1)]
} else if (image_format == '010') {   /* YUV422 */
CuComplexityLevel = (ComplexityLevel[0] + ChromaComplexityLevel) >> 1
} else if (image_format == '011' || image_format == '100') {   /* YUV444 or RGB444 */
CuComplexityLevel = ComplexityDivide3Table[ComplexityLevel[0] + (ChromaComplexityLevel << 1)]
}
```

wherein ChromaComplexityLevel indicates the complexity level of the chrominance channel.

For ChromaComplexityLevel, it needs to be calculated separately at the encoder (the decoder obtains it directly from the code stream).

$$ChromaComplexityLevel = (ComplexityLevel[1] + ComplexityLevel[2]) >> 1;$$

or

$$ChromaComplexityLevel = max(ComplexityLevel[1], ComplexityLevel[2]);$$

or

$$ChromaComplexityLevel = min(ComplexityLevel[1], ComplexityLevel[2]);$$

or ChromaComplexityLevel = ComplexityLevel[1]; or ChromaComplexityLevel = ComplexityLevel[2].

In an embodiment, as described above, the complexity information includes the complexity level, a reference complexity level, and a second reference coefficient; the reference complexity level includes any of a first complexity level, a second complexity level and a third complexity level; the first complexity level is the maximum value among the complexity levels of the encoding blocks of P-Q channels in P channels; Q is an integer less than P; the second complexity level is the minimum value among the complexity levels of the encoding blocks of P-Q channels in P channels; the third complexity level is the average value of the complexity levels of the encoding blocks of P-Q channels in P channels; the second reference coefficient is used to characterize the size relationship and/or proportional relationship among the complexity levels of the encoding blocks of P-Q channels in P channels. In this case, the above S1202 can specifically include: parsing, by the decoder, the complexity levels of the encoding blocks of Q channels from substreams obtained by encoding of the encoding blocks of Q channels respectively; parsing, by the decoder, the reference complexity level and the second reference coefficient from the substreams obtained by encoding of the encoding blocks of P-Q channels in P channels; determining, by the decoder, the complexity levels of the encoding blocks of P-Q channels based on the complexity levels of the encoding blocks of Q channels and the second reference coefficient.

In an embodiment, when the complexity levels of the channels are transmitted in all of the substreams corresponding to the channels, the decoder can obtain BiasInit1 by looking up the following Table 2 based on the complexity level ComplexityLevel[0] of the encoding block of the luminance channel and the complexity level ComplexityLevel[1] of the encoding block of the first chrominance channel, and obtain BiasInit2 by looking up the following Table 2 based on the complexity level ComplexityLevel[0] of the encoding block of the luminance channel and the complexity level ComplexityLevel[2] of the encoding block of the second chrominance channel; and then, the decoder can calculate the quantization parameter Qp[0] of the luminance channel, the quantization parameter Qp[1] of the first chrominance channel, and the quantization parameter Qp[2] of the second chrominance channel.

For example, the decoder can calculate the quantization parameters according to the following process:

```
Bias1 = (BiasInit1 × FormatBias) >> 1
Bias2 = (BiasInit2 × FormatBias) >> 1
tmp = (ChromaSampleRate >> 1) × (Bias1 + Bias2)
tmp = ((tmp << 7) + 256) >> 9
Qp[0] = Clip3(0, MaxQp[0], (MasterQp - tmp) >> 7)
Qp[1] = Clip3(0, MaxQp[1], (MasterQp + Bias1) >> 7)
Qp[2] = Clip3(0, MaxQp[2], (MasterQp + Bias2) >> 7)
```

## Table 1 the corresponding relationship between ChromaSampleRate, FormatBias and ImageFormat

| ImageFormat | YUV400 | YUV420 | YUV422 | RGB444 | YUV444 |
|---|---|---|---|---|---|
| ChromaSampleRate | 0 | 2 | 4 | 8 | 8 |
| FormatBias | 0 | 114 | 85 | 128 | 57 |

Table 2 the definition of BiasInit

| ComplexityLevel[0] | 0 | | | | |
|---|---|---|---|---|---|
| ComplexityLevel[1/2] | 0 | 1 | 2 | 3 | 4 |
| BiasInit | 6 | 6 | 7 | 8 | 9 |
| ComplexityLevel[0] | 1 | | | | |
| ComplexityLevel[1/2] | 0 | 1 | 2 | 3 | 4 |
| BiasInit | 6 | 6 | 6 | 7 | 8 |
| ComplexityLevel[0] | 2 | | | | |
| ComplexityLevel[1/2] | 0 | 1 | 2 | 3 | 4 |
| BiasInit | 4 | 6 | 6 | 6 | 7 |
| ComplexityLevel[0] | 3 | | | | |
| ComplexityLevel[1/2] | | | | | |
| BiasInit | 2 | 4 | 6 | 6 | 6 |
| ComplexityLevel[0] | 4 | | | | |
| ComplexityLevel[1/2] | 0 | 1 | 2 | 3 | 4 |
| BiasInit | 0 | 2 | 4 | 6 | 6 |

In an embodiment, the decoder can also obtain BiasInit by looking up Table 2 based on the complexity level ComplexityLevel[0] of the encoding block of the chrominance channel and the complexity level ChromaComplexityLevel of the encoding block of the chrominance channel, and then calculate Qp[0], Qp[1] and Qp[2] by the following process.

```
Bias = (BiasInit × FormatBias) >> 1
tmp = ChromaSampleRate × Bias
tmp = ((tmp << 7) + 128) >> 8
Qp[0] = Clip3(0, MaxQp[0], (MasterQp - tmp) >> 7)
Qp[1] = Clip3(0, MaxQp[1], (MasterQp + Bias) >> 7)
Qp[2] = Qp[1]
Qp[1] = Clip3(0, MaxQp[1], Qp[1] + ComplexityLevel[1] - ChromaComplexityLevel)
Qp[2] = Clip3(0, MaxQp[2], Qp[2] + ComplexityLevel[2] - ChromaComplexityLevel)
```

In an embodiment, as described above, the first complexity level and the second complexity level can be transmitted in the substream corresponding to the encoding block of the first chrominance channel. In this case, the decoder can obtain BiasInit by looking up Table 2 based on the complexity level ComplexityLevel[0] of the encoding block of the luminance channel and the complexity level ChromaComplexityLevel (taking the first complexity level/complexity level of the encoding block of the first chrominance channel) of the encoding block of the chrominance channel , and then calculate Qp[0], Qp[1] and Qp[2] through the following process.

```
Bias = (BiasInit × FormatBias) >> 1
tmp = ChromaSampleRate × Bias
tmp = ((tmp << 7) + 128) >> 8
Qp[0] = Clip3(0, MaxQp[0], (MasterQp - tmp) >> 7)
if (0 == complexity_level_flag[2]) {
Qp[1] = Clip3(0, MaxQp[1], (MasterQp + Bias) >> 7)
Qp[2] = Clip3(0, MaxQp[2], (MasterQp + Bias - 32) >> 7)
} else if (1 == complexity_level_flag[2]) {
Qp[1] = Clip3(0, MaxQp[1], (MasterQp + Bias - 32) >> 7)
Qp[2] = Clip3(0, MaxQp[2], (MasterQp + Bias) >> 7)
}
```

In an embodiment, as described above, the third complexity level can be transmitted in the substream corresponding to the encoding block of the first chrominance channel. In this case, the ChromaComplexityLevel mentioned above can take the third complexity level, and Qp[0], Qp[1] and Qp[2] are calculated by the following process.

```
Bias = (BiasInit × FormatBias) >> 1
tmp = ChromaSampleRate × Bias
tmp = ((tmp << 7) + 128) >> 8
Qp[0] = Clip3(0, MaxQp[0], (MasterQp - tmp) >> 7)
Qp[1] - Clip3(0, MaxQp[1], (MasterQp + Bias) >> 7)
Qp[2] - Qp[1]
if (0 == complexity_level_flag[2]) {
Qp[1] - Clip3(0, MaxQp[1], Qp[1] - 2)
 } else if (1 == complexity_level_flag[2]) {
Qp[2] - Clip3(0, MaxQp[2], Qp[2] - 1)
```

}

VI. The chrominance channels sharing a substream.

Optional implementation: for an image to be processed in YUV420/YUV422 format, a total of three substreams are transmitted, namely, a first substream, a second substream, and a third substream. The first substream includes syntax elements and a transformation coefficient/residual coefficient of a luminance channel, the second substream includes syntax elements and a transformation coefficient/residual coefficient of the first chrominance channel, and the third substream includes syntax elements and a transformation coefficient/residual coefficient of the second chrominance channel.

Improved scheme: for the image to be processed in YUV420/YUV422 format, the syntax elements and the transformation coefficient/residual coefficient of the first chrominance channel, as well as the syntax elements and the transformation coefficient/residual coefficient of the second chrominance channel are configured in the second substream for transmitting, and the third substream is cancelled.

Embodiment 7:

Figure 22 is a schematic flow diagram of yet another image encoding method provided in an embodiment of the present application. As shown in Figure 22, the image encoding method includes S1201 to S1203.

S1201, an encoder acquires an encoding unit.

The encoding unit is image blocks in the image to be processed. The encoding unit includes encoding blocks of multiple channels.

S1202, the encoder merges substreams obtained by encoding of the encoding blocks of at least two preset channels in multiple channels into one merged substream when an image format of the image to be processed is a preset format.

The preset format can be pre-set in the encoder/decoder. For example, the preset format can be YUV420 or YUV422, etc., and the preset channels can be the first chrominance channel and the second chrominance channel. Exemplarily, the definition of the encoding block of the first substream can be as shown below:

```
coding_block_data_substream0(cuIdxX, cuIdxY) {
complexity_level_flag[0]
if (ComplexityLevelFlag[0] = 0) {
 delta_level[0]
}
pred_mode[0]
if (PredMode[0] == 'ORG_MODE' && Allowfallback) {
 fallback_type
}
if (PredMode[0] == 'IBC_MODE') {
 for (blkIdx=0; blkIdx<8; blkIdx++) {
      abs_bvd_minus1[blkIdx]
 }
}
if (PredMode[0] != 'POINT_MODE_0' && PredMode[0] != 'POINT_MODE_1' && PredMode[0] != 'ORG_MODE'
&& !FallbackFlag) {
 resi_skip[0]
}
if (ResiSkip[0] != 1) {
 residual_data(0)
}
}
```

Exemplarily, the definition of the encoding block of the second substream can be as shown below:

```
coding_block_data_substream1(cuIdxX, cuIdxY) {
complexity_level_flag[1]
if (ComplexityLevelFlag[1] == 1) {
 delta_level[1]
}
if (PredMode[0] != 'IBC_MODE') {
 pred_mode[1]
}
if (image_format == '001') { YUV420 */
 residual_data(1)
} else if (image_format == '010') { /* YUV422 */
 residual_data(1)
} else if (image_format == '011' || image_format == '100') { /* YUV444 or RGB444 */
 if (PredMode[1] != 'POINT_MODE_0' && PredMode[1] != 'POINT_MODE_1' && PredMode[1] != 'ORG_MODE'
&& !Fallback) {
        resi_skip[1]
  }
  if (ResiSkip[1] != 1) {
        residual_data(1)
  }
}
if (PredMode[0] != 'IBC_MODE') {
 pred_mode[2]
}
if (image_format == '001') { /* YUV420 */
  residual_data(2)
} else if (image_format == '010') { /* YUV422 */
  residual_data(2)
} else if (image_format == '011' || image_format == '100') { /* YUV444 or RGB444 */
  residual_data(2)
} else if (image_format == '010') { /* YUV422 */
 if (PredMode[2] != 'POINT_MODE_0' && PredMode[2] != 'POINT_MODE_1' && PredMode[2] != 'ORG_MODE'
&& !Fallback) {
        resi_skip[2]
  }
  if (ResiSkip[2] != 1) {
        residual_data(2)
  }
 }
 }
 }
```

It should be understood that the number of bits of the syntax elements and quantized transformation coefficients of the two chrominance channels after being encoded is usually smaller than that of the luminance channel. By merged the syntax elements of the two chrominance channels into the second substream for transmission, the difference in the number of bits between the first substream and the second substream can be reduced and the theoretical expansion rate is reduced.

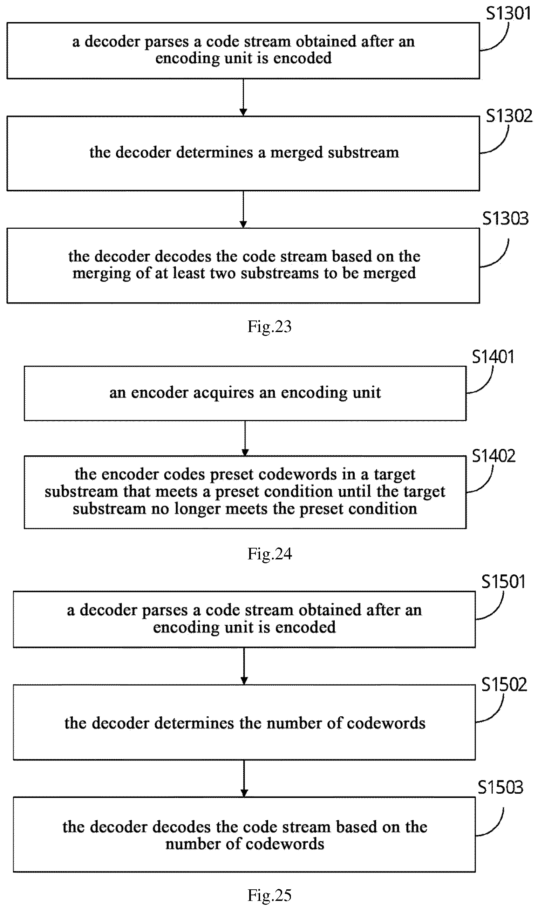

Correspondingly, an embodiment of the present application also provide an image decoding method. Figure 23 is a schematic flow diagram of yet another image decoding method provided by the embodiment of the present application. As shown in Figure 23, the method includes S1301 to 1303.

S1301, a decoder parses a code stream obtained after an encoding unit is encoded.

S1302, the decoder determines a merged substream.

The merged substream is obtained by merging substreams obtained by encoding of the encoding blocks of at least two preset channels in multiple channels when an image format of the image to be processed is a preset format.

S1303, the decoder decodes the code stream based on the merging of at least two substreams to be merged.

VII. Substream filling.

Improved schema: filling preset codewords in a substream with the number of bits less than the bit number threshold.

Embodiment 8:

Figure 24 is a schematic flow diagram of another image encoding method provided in an embodiment of the present application. As shown in Figure 24, the method includes S1401-S1402.

S1401, an encoder acquires an encoding unit.

The encoding unit includes encoding blocks of multiple channels.

S1402, the encoder encodes preset codewords in a target substream that meets a preset condition until the target substream no longer meets the preset condition.

The target substream is a substream in the multiple substreams. The multiple substreams are a code stream obtained by encoding of the encoding blocks of the multiple channels. The preset codeword can be "0" or other codewords, etc., which is not limited in the embodiments of the present application.

In an embodiment, the preset condition includes: the number of bits of the substream is less than a preset first bit number threshold.

The first bit number threshold can be pre-set in the encoder/decoder, or can be transmitted in the code stream by the encoder/decoder, which is not limited in the embodiments of the present application. The first bit number threshold is used to indicate the number of bits of an allowable minimum CB in CU.

In an embodiment, the preset condition include: there is an encoded encoding block of which the number of bits is less than a preset second bit number threshold, in the code stream of the encoding unit.

The second bit number threshold can also be pre-set in the encoder/decoder, or can be transmitted in the code stream by the encoder/decoder, which is not limited in the which is not limited in the embodiments of the present application. The second bit number threshold is used to indicate the number of bits of an allowable minimum substream in multiple substreams.

It should be understood that, by filling preset codewords in a substream with the smaller number of bits, the denominator for the expansion rate can be directly increased, thereby reducing the actual expansion rate of the encoding unit.

Correspondingly, an embodiment of the present application also provides an image decoding method. Figure 25 is a schematic flow diagram of another image decoding method provided in the embodiment of the present application. As shown in Figure 25, the image decoding method includes S1501-S1503.

S1501, a decoder parses a code stream obtained after an encoding unit is encoded.

The encoding unit includes encoding blocks of multiple channels.

S1502, the decoder determines the number of codewords.

The number of codewords is used to indicate the number of preset codewords encoded in a target substream that meets the preset condition. The preset codewords are encoded into the target substream when there is the target substream that meets the preset condition.

S1503, the decoder decodes the code stream based on the number of codewords.

For example, the decoder can delete the preset codewords based on the number of codewords, and decode the code stream after the preset codewords are deleted.

VIII. Pre-setting an expansion rate.

Improved schema: controlling the current actual expansion rate by pre-setting an expansion rate as a threshold.

Embodiment 9:

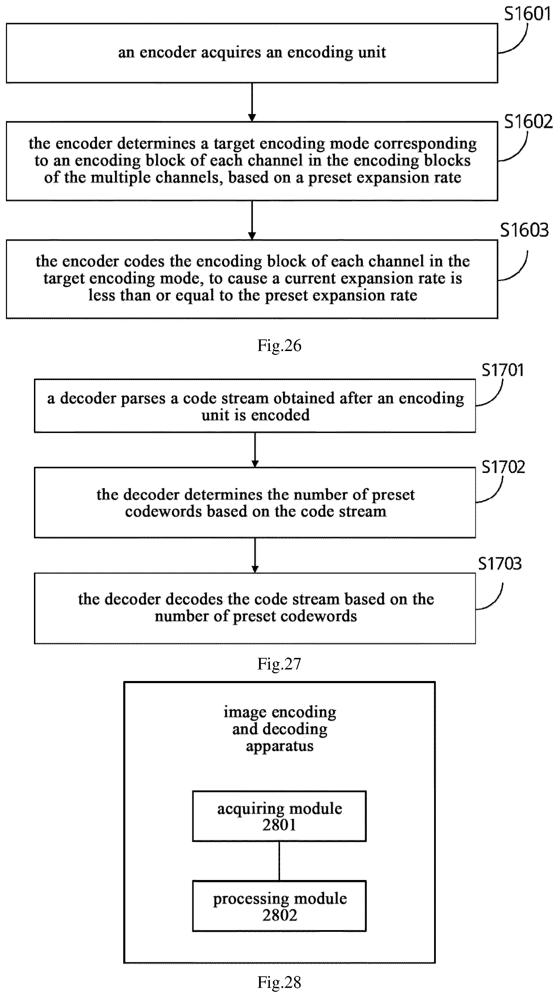

Figure 26 is a schematic process diagram of another image encoding method provided in an embodiment of the present application. As shown in Figure 26, the image encoding method includes S1601-S1603.

S1601, an encoder acquires an encoding unit.

The encoding unit includes encoding blocks of multiple channels.

S1602, the encoder determines a target encoding mode corresponding to an encoding block of each channel in the encoding blocks of the multiple channels, based on a preset expansion rate.

The preset expansion rate can be preset in the encoder and the decoder. Or, the preset expansion rate can also be encoded into a substream by the encoder and transmitted to the decoder. The embodiments of the present application do not limit this.

S1603, the encoder encodes the encoding block of each channel in the target encoding mode, to cause a current expansion rate is less than or equal to the preset expansion rate.

In an embodiment, the preset expansion rate includes a first preset expansion rate; the current expansion rate is equal to the quotient of the number of bits of a maximum substream and the number of bits of a minimum substream; the maximum substream is a substream with the highest number of bits among the multiple substreams obtained by encoding of the encoding blocks of the multiple channels; the minimum substream is a substream with the smallest number of bits among the multiple substreams obtained by encoding of the encoding blocks of the multiple channels.

In an embodiment, as described above, the encoder can preset a first preset expansion rate as the allowable maximum threshold in the encoding unit, and can acquire the statuses of all current substreams before encoding the encoding unit, acquire a status of a substream with a maximum number of fixed-length code streams having been sent and with a largest total amount of code streams which is obtained by adding the maximum number of fixed-length code streams having been sent by this current substream and the remaining code streams in the current substream, and acquire a status of a substream with a minimum number of fixed-length code streams having been sent and with a smallest total amount of code streams which is obtained by adding the minimum number of fixed-length code streams having been sent by this current substream and the remaining code streams in the current substream remaining amount among the current substreams. If the ratio of the maximum state to the minimum state or the difference between the maximum state and the minimum state is greater than a preset difference threshold, the encoder can no longer use the rate distortion optimization as a criterion for selecting the target mode, and only select an encoding mode with a lower code rate for the substream with the maximum state, and select a mode with a higher code rate for the substream with the minimum state.

Exemplarily, taking the preset expansion rate being set as B_th and B_delta being set as an auxiliary threshold as an example, the encoding blocks of three channels Y/U/V are encoded to obtain three substreams. When encoding one encoding unit, the encoder can obtain the statuses of these three substreams. If the maximum code rate of the first substream (i.e., a substream corresponding to the Y channel) is set to bit_stream1, and the minimum code rate of the second substream (i.e., a substream corresponding to the U channel) is set to bit_stream1, then when bit_stream1/bit_stream2>B_th-B_delta, the encoder can select the mode with a higher code rate for an encoding block of the Y channel and select the mode with a lower code rate for an encoding block of the U channel.

In an embodiment, the preset expansion rate includes the second preset expansion rate; the current expansion rate is equal to the quotient of the number of bits of an encoding block with the largest number of bits among the encoded encoding blocks of the multiple channels and the number of bits of an encoding block with the smallest number of bits among the encoded encoding blocks of the multiple channels.

In an embodiment, as described above, the encoder can preset a second preset expansion rate as the allowable maximum threshold in the encoding unit, and obtain the code rate cost for each mode before encoding a certain encoding block. If an encoding mode corresponding to the optimal code rate cost obtained based on the rate distortion cost meets the requirement that the actual expansion rate encoded into each substream is less than the preset expansion rate, then the encoding mode corresponding to the optimal code rate cost is taken as the target encoding mode for the encoding block, and the target encoding mode is encoded into a substream corresponding to the encoding block; if the encoding mode corresponding to the optimal code rate cost cannot meet the requirement that the actual expansion rate encoded into each substream is less than the preset expansion rate, the encoder will change a mode with the highest code rate to a mode with a code rate lower than that of the mode with the highest code rate, or change a mode with the lowest code rate to a mode with a code rate higher than that of the mode with the lowest code rate, or simultaneously change a mode with the highest code rate to a mode with a code rate lower than that of the mode with the highest code rate and change a mode with the lowest code rate to a mode with a code rate higher than that of the mode with the lowest code rate.

Exemplarily, taking the preset expansion rate being A_th as an example, the encoding blocks of three channels Y/U/V are encoded to obtain three substreams. Assuming that the optimal code rate costs of the three channels Y/U/V are rate_y, rate_u, and rate_v respectively, with a code rate for rate_y is the highest and a code rate for rate_u is the lowest. If rate_y/ rate_u$\geq$A_th, then the encoder can modify a target encoding mode for the Y channel to cause the target encoding mode to satisfy that the code rate cost is less than rate_y, or modify a target encoding mode for the U channel to cause the target encoding mode to satisfy that the code rate cost is greater than rate_u, so that rate_y/ rate___u<A_th and rate_y/rate_v<A_th.

The image encoding method provided in the embodiment of the present application can also intervene in the target encoding mode selected for the encoding block of each channel by the preset expansion rate, so that when the encoder encodes each channel in the target encoding mode, the actual expansion rate of the encoding unit is less than the preset expansion rate, thereby reducing the actual expansion rate.

In an embodiment, the image encoding method may further include: by the encoder, determining the current expansion rate; when the current expansion rate is greater than the first preset expansion rate, encoding the preset codewords in the minimum substream so that the current expansion rate is less than or equal to the first preset expansion rate. For example, the encoder can fill preset codewords at the end of the minimum substream.

In an embodiment, the image encoding method may further include: by the encoder, determining the current expansion rate; when the current expansion rate is greater than the second preset expansion, encoding, by the encoder, preset codewords in an encoding block with the smallest number of bits, to cause the current expansion rate to be less than or equal to the second preset expansion rate.

Correspondingly, an embodiment of the present application also provides an image decoding method. Figure 27 is a schematic flow diagram of yet another image decoding method provided in the embodiment of the present application.

As shown in Figure 27, the method includes S1701 to S1703.

S1701, a decoder parses a code stream obtained after an encoding unit is encoded.

S1702, the decoder determines the number of preset codewords based on the code stream.

S1703, the decoder decodes the code stream based on the number of preset codewords.

S1701 to S1703 can be referred to the description for S1501 to S1503 mentioned above, which will not be repeated here.

It should be noted that the image encoding methods and image decoding methods provided by the embodiments of the present application have been described in a series of separate embodiments. In actual use, the above series of embodiments and the optional solutions in the embodiments can be combined with each other. The embodiments of the present application do not limit the specific combinations.

The above mainly describes the solution provided by the embodiments of the present application from the perspective of methods. In order to achieve the above functions, it includes respective hardware structures and/or software modules for execution of each function. Those skilled in the art should be easily recognized that, the present application can be implemented in the form of hardware or a combination of hardware and computer software, in combination with the units and algorithm steps described in the embodiments disclosed herein. Whether a certain function is executed by hardware or by driving hardware via computer software depends on the specific application and design constraints of the technical solution. Professional technical objectives can use different methods to implement the described functions for each specific application, but such implementation should not be considered beyond the scope of the present application.

In the exemplary embodiments, an embodiment of the present application also provides an image encoding apparatus, and any of the above image encoding methods can be executed by the image encoding apparatus. The image encoding apparatus provided in the embodiment of the present application can be the source device 10 or the video encoder 102 mentioned above.

Figure 28 is a schematic composition diagram of the image encoding apparatus provided in the embodiment of the present application. As shown in Figure 28, the image encoding apparatus includes an acquiring module 2801 and a processing module 2802.

In an embodiment, the acquiring module 2801 is configured for acquiring an encoding unit, wherein the encoding unit is an image block in an image to be processed, and includes encoding blocks of multiple channels, and the multiple channels include a first channel which is any one of the multiple channels. The processing module 2802 is configured for encoding an encoding block of the first channel in a first encoding mode, wherein the first encoding mode is a mode in which sample values in the encoding block of the first channel are encoded according to a first fixed-length code; a code length of the first fixed-length code is less than or equal to an image bit width of the image to be processed; the image bit width is used to characterize the number of bits required to store each sample in the image to be processed.

In an embodiment, the acquiring module 2801 is further configured for acquiring a code stream obtained after an encoding unit is encoded, wherein the encoding unit is an image block in an image to be processed, and includes encoding blocks of multiple channels, and the multiple channels include a first channel which is any one of the multiple channels; the code stream includes multiple substreams obtained after the encoding blocks of multiple channels are encoded, and the multiple substreams correspond one-to-one with the multiple channels. The processing module 2802 is further configured for decoding a substream corresponding to the first channel in a first decoding mode, wherein the first decoding mode is a mode in which sample values are parsed from the substream corresponding to the first channel according to a first fixed-length code; a code length of the first fixed-length code is less than or equal to an image bit width of the image to be processed; the image bit width is used to characterize the number of bits required to store each sample in the image to be processed.

In an embodiment, the acquiring module 2801 is further configured for acquiring an encoding unit, wherein the encoding unit is an image block in an image to be processed, and the encoding unit includes encoding blocks of multiple channels. The processing module 2802 is further configured for determining a first total code length, wherein the first total code length is a total code length of a first code stream obtained after each of the encoding blocks of the multiple channels is encoded in a target encoding mode corresponding to the encoding block; the target encoding mode includes a first encoding mode; the first encoding mode is a mode in which sample values in an encoding block are encoded according to a first fixed-length code; a code length of the first fixed-length code is less than or equal to an image bit width of the image to be processed; the image bit width is used to characterize the number of bits required to store each sample in the image to be processed; when the first total code length is greater than or equal to the remaining size of a code stream buffer, encoding the encoding blocks of the multiple channels in a fallback mode, wherein a mode flag of the fallback mode is the same as that of the first encoding mode.

In an embodiment, the processing module 2802 is further configured for encoding a mode flag in multiple substreams obtained by encoding of the encoding blocks of the multiple channels; the mode flag is used to indicate an encoding mode used for each of the encoding block of the multiple channels.

In an embodiment, the multiple channels includes a first channel which is any one of the multiple channels; the processing module 2802 is specifically configured for encoding a sub-mode flag in a substream obtained by encoding of an encoding block of the first channel, wherein the sub-mode flag is used to indicate the type of fallback mode used for the encoding blocks of multiple channels.

In an embodiment, the multiple channels include a first channel which is any one of the multiple channels; the processing module 2802 is specifically configured for encoding a first flag, a second flag, and a third flag in the substream obtained by encoding of the encoding block of the first channel, wherein the first flag is used to indicate that the encoding blocks of the multiple channels are encoded using the first encoding mode or the fallback mode; the second flag is used to indicate that the encoding blocks of the multiple channels are encoded using the target mode which is either of the first encoding mode and the fallback mode; when the second flag indicates that the target mode used for the encoding blocks of the multiple channels is the fallback mode, the third flag is used to indicate the type of fallback mode used for the encoding blocks of the multiple channels.

In an embodiment, the processing module 2802 is further configured for determining a target encoding code length of the encoding unit based on the remaining size of the code stream buffer and a target bits per pixel BPP, wherein the target encoding code length is used to indicate a code length required to encode the encoding unit; determining an allocated code length to the multiple channels based on the encoding code length, wherein the allocated code length is used to indicate a code length required to encode residuals of the encoding blocks of the multiple channels; determining an encoding code length allocated to each of the multiple channels based on an average value of the allocated code length across the multiple channels.

In an embodiment, the processing module 2802 is further configured for parsing a code stream obtained after an encoding unit is encoded, wherein the encoding unit includes encoding blocks of multiple channels; if a mode flag is parsed from substreams obtained by encoding of the encoding blocks of the multiple channels and a first total code length is greater than the remaining size of a code stream buffer, then determining that a target decoding mode for the substreams is the fallback mode, wherein the mode flag is used to indicate that the encoding blocks of the multiple channels are encoded in the first encoding mode or the fallback mode, wherein the first total code length is a total code length of a first code stream obtained by encoding of each of the encoding blocks of the multiple component channels in the target encoding mode i.e., the first encoding mode corresponding to the encoding block; the target encoding mode includes a first encoding mode; the first encoding mode is a mode in which sample values in an encoding block are encoded according to a first fixed-length code; a code length of the first fixed-length code is less than or equal to an image bit width of the image to be processed; the image bit width is used to characterize the number of bits required for encoding and storing each sample in the image to be processed; parsing a preset flag bit in the substreams, to determine a target fallback mode, wherein the target fallback mode is one type of fallback mode; the preset flag bit is used to indicate the position of a sub-mode flag; the sub-mode flag is used to indicate the type of fallback mode adopted when the encoding blocks of the multiple channels are encoded; the fallback mode includes a first fallback mode and a second fallback mode; decoding the substreams in the target fallback mode.

In an embodiment, the processing module 2802 is further configured for determining the target decoding code length of the encoding unit based on the remaining size of the code stream buffer and the target bits per pixel BPP, wherein the target decoding code length is used to indicate a code length required to decode the code stream of the encoding unit; determining the allocated code length to the multiple channels based on the decoding code length, wherein the allocated code length is used to indicate a code length required to decode residuals of the code stream of the encoding blocks of multiple channels; determining a decoding code length allocated to each of the multiple channels based on an average value of the allocated code length across multiple channels.

In an embodiment, the processing module 2802 is further configured for parsing a code stream obtained after an encoding unit is encoded, wherein the encoding unit includes encoding blocks of multiple channels, and the multiple channels including the first channel which is any one of the multiple channels; parsing a first flag from a substream obtained by encoding of an encoding block of the first channel, wherein the first flag is used to indicate that the encoding blocks of the multiple channels are encoded using a first encoding mode or a fallback mode; the first encoding mode is a mode in which sample values in the encoding block of the first channel are encoded according to a first fixed-length code; a code length of the first fixed-length code is less than or equal to an image bit width of the image to be processed; the image bit width is used to characterize the number of bits required for encoding and storing each sample in the image to be processed; parsing a second flag from the substream obtained by encoding of the encoding block of the first channel, wherein the second flag is used to indicate that the encoding blocks of the multiple channels are encoded using a target mode which is either of the first encoding mode and the fallback mode; when the second flag indicates that the target mode used for the encoding blocks of the multiple channels is the fallback mode, parsing a third flag from the substream obtained by encoding of the encoding block of the first channel; determining a target decoding mode for the multiple channels based on the type of fallback mode indicated by the third flag, and decoding the substreams obtained by encoding of the encoding blocks of the multiple channels in the target decoding mode.

In an embodiment, the processing module 2802 is further configured for determining a target decoding code length of the encoding unit based on the remaining size of the code stream buffer and the target bits per pixel BPP, wherein the target decoding code length is used to indicate a code length required to decode the code stream of the encoding unit; determining an allocated code length to multiple channels based on the decoding code length, wherein the allocated code length is used to indicate a code length required to decode the residuals of the code stream of the encoding blocks of multiple channels; determining a decoding code length allocated to each of the multiple channels based on an average value of the allocated code length across the multiple channels.

In an embodiment, the acquiring module 2801 is also further configured for acquiring an encoding unit, wherein the encoding unit includes encoding blocks of multiple channels. The processing module 2802 is further configured for encoding an encoding block of at least one of the multiple channels in an intra block copy IBC mode; acquiring block vectors BVs of reference prediction blocks, wherein the BVs of the reference prediction blocks are used to indicate positions of the reference prediction blocks in an encoded image block, and the reference prediction blocks are used to characterize a prediction value of the encoding block encoded in the IBC mode; encoding the BVs of the reference prediction blocks in at least one substream obtained by encoding of the encoding block of at least one channel in the IBC mode.

In an embodiment, the processing module 2802 is specifically configured for determining a target encoding mode for the at least one channel using a rate distortion optimization strategy, wherein the target encoding mode includes an IBC mode; encoding the encoding block of the least one channel in the target encoding mode.

In an embodiment, the processing module 2802 is specifically configured for encoding the encoding blocks of the multiple channels in the IBC mode; encoding the BVs of the reference prediction blocks in the substreams obtained by encoding of the encoding block of all channels in the multiple channels in the IBC mode.

In an embodiment, the processing module 2802 is specifically configured for encoding the BVs of the reference prediction blocks in a code stream obtained by encoding of the encoding block of all channels in the multiple channels in the IBC mode according to a preset ratio.

In an embodiment, the processing module 2802 is further configured for analyzing a code stream obtained after an encoding unit is encoded, wherein the encoding unit includes encoding blocks of multiple channels, and the code stream includes multiple substreams obtained after the encoding blocks of the multiple channels are encoded, and the multiple substreams correspond one-to-one with the multiple channels; determining positions of reference prediction blocks from the multiple substreams based on block vectors BVs of the reference prediction blocks parsed from at least one of the multiple substreams, wherein the reference prediction blocks are used to characterize a prediction value of the encoding block encoded in an intra block copy IBC mode, and the BVs of the reference prediction blocks are used to indicate positions of the reference prediction blocks in an encoded image block; determining the prediction value of the decoding block decoded in the IBC mode based on information about the positions of the reference prediction blocks; reconstructing the decoding block decoded in to the IBC mode based on the prediction value.

In an embodiment, the BVs of the reference prediction blocks are encoded in multiple substreams; the BVs of the reference prediction blocks are obtained when encoding the encoding blocks of multiple channels in the IBC mode.

In an embodiment, the acquiring module 2801 is further configured for acquiring processing coefficients corresponding to the encoding unit, wherein the processing coefficients include one or more of residual coefficients and transformation coefficients. The processing module 2802 is further configured for grouping the processing coefficients into multiple groups according to the number threshold, wherein the number of processing coefficients in each group of processing coefficients in the multiple groups of processing coefficients is less than or equal to the number threshold.

In an embodiment, the processing module 2802 is further configured for parsing a code stream obtained after an encoding unit is encoded and determining processing coefficients corresponding to the encoding unit, wherein the processing coefficients include one or more of residual coefficients and transformation coefficients, the processing coefficients includes multiple groups of processing coefficients, and the number of each group of processing coefficients is less than or equal to the number threshold; decoding the code stream based on the processing coefficients.

In an embodiment, the acquisition module 2801 is further configured for obtaining an encoding unit, wherein the encoding unit includes encoding blocks of P channels, and P is an integer greater than or equal to 2; acquiring complexity information of an encoding block of each channel in P channels, wherein the complexity information is used to characterize the degree of difference in pixel values of an encoding block for each channel. The processing module 2802 is further configured for encoding the complexity information of the encoding block of all of the channels in the substreams obtained by encoding of the encoding blocks of P channels.

In an embodiment, the complexity information includes a complexity level; the processing module 2802 is specifically configured for encoding the complexity levels of encoding blocks of all channels in the substreams obtained by encoding of the encoding blocks of P channels, respectively.

In an embodiment, the complexity information includes a complexity level and a first reference coefficient, wherein the first reference coefficient is used to characterize the proportional relationship among complexity levels of encoding blocks of different channels; the processing module 2802 is specifically configured for encoding complexity levels of encoding blocks of Q channels in P channels in the substreams obtained by encoding of the encoding blocks of Q channels, respectively, wherein Q is an integer less than P; encoding the first reference coefficient in substreams obtained by encoding of encoding blocks of P-Q channels in P channels.

In an embodiment, the complexity information includes the complexity level, a reference complexity level, and a second reference coefficient, wherein the reference complexity level includes any of a first complexity level, a second complexity level, and a third complexity level; the first complexity level is the maximum value among the complexity levels of the encoding blocks of P-Q channels in P channels; Q is an integer less than P; the second complexity level is the minimum value among the complexity levels of the encoding blocks of P-Q channels in P channels; the third complexity level is the average value of the complexity levels of the encoding blocks of P-Q channels in P channels; the second reference coefficient is used to characterize the size relationship and/or proportional relationship among the complexity levels of the encoding blocks of P-Q channels in P channels; the processing module 2802 is specifically configured for encoding the complexity levels of the encoding blocks of Q channels in P channels in the substreams obtained by encoding of the encoding blocks of Q channels respectively; encoding the reference complexity level and second reference coefficient in substreams obtained by encoding of the encoding blocks of P-Q channels in P channels.

In an embodiment, the processing module 2802 is further configured for parsing a code stream obtained after an encoding unit is encoded, wherein the encoding unit includes encoding blocks of P channels, P is an integer greater than or equal to 2, the code stream includes multiple substreams obtained after the encoding blocks of the P channels are encoded, and the multiple substreams correspond one-to-one with the P channels; parsing complexity information of an encoding block of each channel from substreams obtained by encoding of the encoding blocks of P channels, wherein the complexity information is used to characterize the degree of difference in pixel values of encoding blocks of each channel; determining, based on the complexity information of the encoding block of each channel, a quantization parameter of the encoding block of the channel; decoding the code stream based on the quantization parameter of the encoding block of each channel.

In an embodiment, the complexity information includes a complexity level; the processing module 2802 is further configured for parsing the complexity level of the encoding block of each channel from the substreams obtained by encoding of the encoding blocks of P channels, respectively.

In an embodiment, the complexity information includes a complexity level and a first reference coefficient, wherein the first reference coefficient is used to characterize the proportional relationship among complexity levels of encoding blocks of different channels; the processing module 2802 is specifically configured for parsing complexity levels of encoding blocks of Q channels in P channels respectively from substreams obtained by encoding of the encoding blocks of Q channels, wherein Q is an integer less than P; parsing the first reference coefficient from substreams obtained by encoding of the encoding blocks of P-Q channels in P channels; determining the complexity levels of the encoding blocks of P-Q channels based on the first reference coefficient and the complexity levels of the encoding blocks of Q channels.

In an embodiment, the complexity information includes a complexity level, a reference complexity level, and a second reference coefficient; the reference complexity level includes any of a first complexity level, a second complexity level, and a third complexity level; the first complexity level is the maximum value among the complexity levels of the encoding blocks of P-Q channels in P channels; Q is an integer less than P; the second complexity level is the minimum value among the complexity levels of the encoding blocks of P-Q channels in P channels; the third complexity level is the average value of the complexity levels of the encoding blocks of P-Q channels in P channels; the second reference coefficient is used to characterize the size relationship and/or proportional relationship among the complexity levels of the encoding blocks of P-Q channels in P channels; the processing module 2802 is specifically configured for parsing the complexity levels of the encoding blocks of Q channels from substreams obtained by encoding of the encoding blocks of Q channels respectively; parsing the reference complexity level and the second reference coefficient from the substreams obtained by encoding of the encoding blocks of P-Q channels in P channels; determining the complexity levels of the encoding blocks of P-Q channels based on the complexity levels of the encoding blocks of Q channels and the second reference coefficient.

In an embodiment, the acquiring module 2801 is further configured for acquiring an encoding unit, wherein the encoding unit includes encoding blocks of multiple channels, and the encoding unit is an image block in an image to be processed. The processing module 2802 is further configured for merging substreams obtained by encoding of the encoding blocks of at least two preset channels in multiple channels into one merged substream when an image format of the image to be processed is a preset format.

In an embodiment, the processing module 2802 is further configured for parsing code stream obtained after an encoding unit is encoded, wherein the encoding unit includes encoding blocks of multiple channels and the encoding unit is an image block in an image to be processed; determining a merged substream, wherein the merged substream is obtained by merging substreams obtained by encoding of the encoding blocks of at least two preset channels in multiple channels when an image format of the image to be processed is a preset format; decoding the code stream based on merging of at least two substreams to be merged.

In an embodiment, the acquiring module 2801 is further configured for acquiring an encoding unit, wherein the encoding unit includes encoding blocks of multiple channels. The processing module 2802 is further configured for encoding preset codewords in a target substream that meets a preset condition until the target substream no longer meets the preset condition; the target substream is a substream among multiple substreams; the multiple substreams are a code streams obtained by encoding of the encoding blocks of the multiple channels.

In an embodiment, the preset condition includes: the number of bits of a substream is less than a preset first bit number threshold.

In an embodiment, the preset condition includes: there is an encoded encoding block of which the number of bits is less than a preset second bit number threshold, in the code stream of the encoding unit.

In an embodiment, the processing module 2802 is further configured for parsing a code stream obtained after an encoding unit is encoded, wherein the encoding unit includes encoding blocks of multiple channels; determining the number of codewords, wherein the number of codewords is used to indicate the number of preset codewords encoded in a target substream that meets a preset condition, and the preset codewords are encoded into the target substream when there is the a target substream that meets the preset condition; decoding the code stream based on the number of codewords.

In an embodiment, the acquiring module 2801 is further configured for acquiring an encoding unit, wherein the encoding unit includes encoding blocks of multiple channels. The processing module2802 is further configured for determining a target encoding mode corresponding to an encoding block of each channel in the encoding blocks of the multiple channels based on a preset expansion rate; encoding the encoding block of each channel in the target encoding mode, to cause current expansion rate to be less than or equal to the preset expansion rate.

In an embodiment, the preset expansion rate includes a first preset expansion rate; the current expansion rate value is equal to the quotient of the number of bits of a maximum substream and the number of bits of a minimum substream; the maximum substream is a substream with the largest number of bits among the multiple substreams obtained by encoding of the encoding blocks of the multiple channels; the minimum substream is a substream with the smallest number of bits among the multiple substreams obtained by encoding of the encoding blocks of the multiple channels.

In an embodiment, the preset expansion rate includes a second preset expansion rate; the current expansion rate is equal to the quotient of the number of bits of an encoding block with the largest number of bits and the number of bits of an encoding block with the smallest number of bits in the encoded encoding blocks of the multiple channels.

In an embodiment, the processing module 2802 is further configured for determining the current expansion rate; when the current expansion rate is greater than the first preset expansion rate, encoding the preset codewords in the minimum substream to cause the current expansion rate to be less than or equal to the first preset expansion rate.

In an embodiment, the processing module2802 is further configured for determining the current expansion rate; when the current expansion rate is greater than the second preset expansion rate, encoding the preset codewords in an encoding block with the smallest number of bits to cause the current expansion rate to be less than or equal to the second preset expansion rate.

In an embodiment, the processing module 2802 is further configured for parsing a code stream obtained after an encoding unit is encoded, wherein the encoding unit includes encoding blocks of multiple channels; determining the number of preset codewords based on the code stream; decoding the code stream based on the number of preset codewords.

It should be noted that the division of modules in Figure 28 is illustrative and only a logical function division. In actual implementation, there may be other ways of division. For example, two or more functions can also be integrated into one processing module. The integrated modules mentioned above can be implemented in the form of hardware or software functional modules.

In the exemplary embodiment, the embodiment of the present application also provides a readable storage medium including executing instructions that, when running on an image encoding and decoding apparatus, cause the image encoding and decoding apparatus to carry out any of the methods provided in the above embodiments.

In the exemplary embodiment, the embodiment of the present application also provides a computer program product containing execution instructions that, when running on an image encoding and decoding apparatus, cause the image encoding and decoding apparatus to carry out any of the methods provided in the above embodiments.

In an exemplary embodiment, the present application also provides a chip including a processor and an interface, wherein the processor is coupled to a memory through the interface, and when the processor executes a computer program in the memory or when an image encoding and decoding apparatus executes instructions, any of the methods provided in the above embodiments is executed.

In the above embodiment, it can be realized in whole or in part by software, hardware, firm ware or any combination thereof. When implemented using software programs, it can be realized in the form of a computer program product in whole or in part. The computer program product includes one or more computer execution instructions. When the computer execution instructions are loaded and executed on the computer, the flow or function described in the embodiment of the present application is generated in whole or in part. The computer can be a general purpose computer, a special purpose computer, a computer network, or other programmable devices. The computer execution instructions can be stored in a computer-readable storage medium, or transferred from one computer-readable storage medium to another computer-readable storage medium. For example, the computer execution instructions can be transferred from a website, a computer, a server or data center transmits to another website site, computer, server or data center through wired (such as coaxial cable, optical fiber, digital subscriber line (DSL)) or wireless (such as infrared, wireless, microwave, etc.). The computer-readable storage medium can be any available medium that can be accessed by a computer or one or more data storage devices including a server, a data center and the like that can be integrated with media. The available medium can be magnetic medium (for example, floppy disk, hard disk, magnetic tape), optical medium (for example, DVD), or semiconductor medium (for example, solid state disk (SSD)), etc.

Although the present application has been described in conjunction with various embodiments, in the process of implementing the claimed protection of the present application, those skilled in the art may understand and implement other variations of the disclosed embodiments by examining the drawings, the disclosed content, and the appended claims. In the claims, the word "comprising" does not exclude other components or steps, and "a" or "an" does not exclude multiple situations. A single processor or other unit can implement several functions listed in the claims. Different dependent claims mention certain measures, but this does not mean that these measures cannot be combined to produce good results.

Although the present application has been described with specific features and embodiments, it is evident that various modifications and combinations can be made without departing from the spirit and scope of the present application. Correspondingly, this description and the drawings are merely exemplary illustrations of the present application as defined by the appended claims, and are deemed to cover any and all modifications, variations, combinations, or equivalents within the scope of the present application. Obviously, technicians in this field can make various modifications and variations to the present application without departing from spirit and scope of the present application. In this way, if these modifications and variations of the present application fall within the scope of the claims and equivalent technologies of the present application, then the present application also intends to include these modifications and variations.

The above description is only a specific implementation of the present application, but the scope of protection of the present application is not limited to this. Any changes or substitutions within the technical scope disclosed in the present application should be included in the scope of protection of the present application. Therefore, the scope of protection of the present application should be based on the scope of protection of the claims.

**Claims**

1.  An image encoding method, comprising:

    acquiring an encoding unit, wherein the encoding unit comprises encoding blocks of multiple channels;
    encoding an encoding block of each channel in the multiple channels based on a preset expansion rate, to cause a current expansion rate to be less than or equal to the preset expansion rate,
    wherein the preset expansion rate comprises a first preset expansion rate; a value of the current expansion rate is derived from a quotient of the number of bits of a maximum substream and the number of bits of a minimum substream; the maximum substream is a substream with the largest number of bits among multiple substreams obtained by encoding of the encoding blocks of the multiple channels; the minimum substream is a substream with the smallest number of bits among the multiple substreams obtained by encoding of the encoding blocks of the multiple channels.

2.  The method according to claim 1, wherein the method further comprises:

    acquiring a first substream and a second substream, wherein the first substream is a substream with a maximum number of fixed-length code streams having been sent and with a largest total amount which is obtained by adding the fixed-length code streams having been sent and a remaining amount in the substream , and the second substream is a substream with a minimum number of fixed-length code streams having been sent and with a smallest total amount which is obtained by adding the fixed-length code streams having been sent and a remaining amount in the substream;
    when a ratio of the first substream to the second substream or a difference between the first substream and the second substream is greater than a preset difference threshold, determining that a target encoding mode for an encoding block corresponding to the first substream is a low code rate encoding mode, and a target encoding mode for an encoding block corresponding to the second substream is a high code rate encoding mode.

3.  The method according to claim 1, wherein the method further comprises:

determining the current expansion rate;

when the current expansion rate is greater than the first preset expansion rate, encoding preset codewords in the minimum substream, to cause the current expansion rate to be less than or equal to the first preset expansion rate.

4. The method according to claim 3, wherein the preset expansion rate further comprises a second preset expansion rate, and the method further comprises:

determining the current expansion rate;

when the current expansion rate is greater than the second preset expansion rate, encoding the preset codewords in an encoding block with the smallest number of bits, to cause the current expansion rate to be less than or equal to the second preset expansion rate.

5. The method according to claim 3 or 4, wherein encoding the preset codewords in the minimum substream comprises: filling the preset codewords at an end of the minimum substream.

6. An image encoding method, comprising:

acquiring an encoding unit, wherein the encoding unit comprises encoding blocks of multiple channels;

encoding an encoding block of at least one channel in the multiple channels in an intra block copy IBC mode;

acquiring block vectors BVs of reference prediction blocks, wherein the BVs of the reference prediction blocks is used to indicate positions of the reference prediction blocks in an encoded image block; the reference prediction blocks are used to characterize a prediction value of the encoding block encoded in the IBC mode;

encoding the BVs of the reference prediction blocks in substreams obtained by encoding of the encoding blocks of all channels in the multiple channels in the IBC mode.

7. The method according to claim 6, wherein encoding the BVs of the reference prediction blocks in the substreams obtained by encoding of the encoding blocks of all channels in the multiple channels in the IBC mode comprises: encoding the BVs of the reference prediction blocks in a code stream obtained by encoding of the encoding blocks of all channels in the multiple channels in the IBC mode according to a preset ratio.

8. The method according to claim 6, wherein the method further comprises:

acquiring residual coefficients corresponding to an encoding unit;

grouping the residual coefficients into multiple groups according to a number threshold, wherein the number of residual coefficients in each group of residual coefficients in the multiple groups of residual coefficients is less than or equal to the number threshold.

9. An image encoding method, comprising:

acquiring an encoding unit, wherein the encoding unit is an image block in an image to be processed, and the encoding unit comprises encoding blocks of multiple channels;

determining a first total code length, wherein the first total code length is a total code length of a first code stream obtained by encoding of each of the encoding blocks of the multiple channels in a target encoding mode corresponding to the encoding block; the target encoding mode comprises a first encoding mode; the first encoding mode is a mode in which sample values in the encoding block are encoded according to a first fixed-length code; a code length of the first fixed-length code is less than or equal to an image bit width of the image to be processed; the image bit width is used to characterize the number of bits required to store each sample in the image to be processed;

when the first total code length is greater than or equal to a remaining size of a code stream buffer, encoding the encoding blocks of the multiple channels in a fallback mode, wherein a mode flag of the fallback mode is same as that of the first encoding mode.

10. The method according to claim 9, wherein the method further comprises: encoding a mode flag in multiple substreams obtained by encoding of the encoding blocks of the multiple channels, wherein the mode flag is used to indicate an encoding mode used for each of the encoding blocks of the multiple channels.

11. The method according to claim 10, wherein the multiple channels comprise a first channel which is any one of the multiple channels; encoding the mode flag in the substreams obtained by encoding of the encoding blocks of the multiple channels comprises:

encoding a sub-mode flag in a substream obtained by encoding of an encoding block of the first channel, wherein the sub-mode flag is used to indicate a type of the fallback mode used for the encoding blocks of the multiple channels; the fallback mode comprises a first fallback mode and a second fallback mode.

12. The method according to claim 10, wherein the multiple channels comprise a first channel which is any one of the multiple channels; encoding the mode flag in the substreams obtained by encoding of the encoding blocks of the multiple channels comprises:

encoding a first flag and a second flag in a substream obtained by encoding of an encoding block of the first channel, wherein the first flag is used to indicate that the encoding blocks of the multiple channels are encoded in the first encoding mode or the fallback mode.

13. The method according to any one of claims 10-12, wherein the method further comprises:

determining a target encoding code length of the encoding unit based on the remaining size of the code stream buffer and a target bits per pixel BPP, wherein the target encoding code length is used to indicate a code length required to encode the encoding unit;

determining an allocated code length to the multiple channels based on the target encoding code length, wherein the allocated code length is used to indicate a code length required to encode residuals of the encoding blocks of the multiple channels;

determining an encoding code length allocated to each of the multiple channels based on an average value of the allocated code length across the multiple channels.

14. The method according to claim 13, wherein determining the allocated code length to the multiple channels based on the target encoding code length comprises:

subtracting a code length occupied by common information from the target encoding code length to obtain the allocated code length to the multiple channels.

15. An image decoding method, comprising:

parsing a code stream obtained after an encoding unit is encoded, wherein the encoding unit comprises encoding blocks of multiple channels;

determining the number of codewords, wherein the number of codewords is used to indicate the number of preset codewords encoded in a target substream that meets a preset condition, and the preset codewords are encoded into the target substream when there is the target substream that meets the preset condition;

decoding the code stream based on the number of codewords.

16. The method according to claim 15, wherein decoding the code stream based on the number of codewords comprises: deleting the preset codewords based on the number of codewords, and decoding the code stream after deleting the preset codewords.

17. An image decoding method, comprising:

parsing a code stream obtained after an encoding unit is encoded, wherein the encoding unit comprises encoding blocks of multiple channels;

determining a current expansion rate;

determining the number of codewords based on the current expansion rate and a first preset expansion rate, wherein the number of codewords is used to indicate the number of preset codewords encoded in a target substream that meets a preset condition; the preset codewords are encoded into the target substream when there is the target substream that meets the preset condition;

decoding the code stream based on the number of codewords.

18. An image decoding method, comprising:

parsing a code stream obtained after an encoding unit is encoded, wherein the encoding unit comprises encoding blocks of multiple channels; the code stream comprises multiple substreams obtained after the encoding blocks of the multiple channels are encoded, and the multiple substreams correspond one-to-one with the multiple channels;

based on block vector BVs of reference prediction blocks parsed from at least one of the multiple substreams, determining positions of the reference prediction blocks from the multiple substreams, wherein the reference prediction blocks are used to characterize a prediction value of a decoding block decoded in an intra block copy IBC mode; the BVs of the reference prediction blocks are used to indicate positions of the reference prediction blocks in a reconstructed image block;

determining the prediction value of the decoding block decoded in the IBC mode based on information about the positions of the reference prediction blocks;

reconstructing the decoding block decoded in the IBC mode based on the prediction value.

19. The method according to claim 18, wherein the decoding block decoded in the IBC mode comprises decoding blocks of at least two channels; the decoding blocks of the at least two channels share the BVs of the reference prediction blocks.

20. The method according to claim 18, wherein the method further comprises:
when an IBC mode identifier is parsed from any one of the multiple substreams, determining that a target decoding mode corresponding to the multiple substreams is the IBC mode.

21. The method according to claim 18, wherein the method further comprises:

determining residual coefficients corresponding to a decoding unit, wherein the residual coefficients comprise multiple groups of residual coefficients; the number of residual coefficients in each group of residual coefficients is less than or equal to a number threshold;
decoding the code stream based on the residual coefficients.

22. An image decoding method, wherein the method comprises:

parsing a code stream obtained after an encoding unit is encoded, wherein the encoding unit comprises encoding blocks of multiple channels;
if a mode flag is parsed from multiple substreams and a second total code length is greater than a remaining size of a code stream buffer, then determining that a target decoding mode for the substreams is a fallback mode, wherein the mode flag is used to indicate whether decoding blocks of the multiple channels are decoded in the fallback mode or whether a first decoding mode is used for a first channel; the second total code length is a total code length of the code stream obtained by encoding of all of the encoding blocks of the multiple channels in a first encoding mode; the first encoding mode is a mode in which sample values in an encoding block are encoded according to a first fixed-length code; a code length of the first fixed-length code is less than or equal to an image bit width of an image to be processed; the image bit width is used to characterize the number of bits required to encode and store each sample in the image to be processed;
parsing a preset flag bit in the substreams, and determining a target fallback mode, wherein the target fallback mode is a type of fallback mode; the preset flag bit is used to indicate a type of the fallback mode used for encoding of the encoding blocks of the multiple channels; the fallback mode comprises a first fallback mode and a second fallback mode;
decoding the substreams in the target fallback mode.

23. The method according to claim 22, wherein the method further comprises:

determining a target decoding code length of the encoding unit based on the remaining size of the code stream buffer and a target bits per pixel BPP, wherein the target decoding code length is used to indicate a code length required to decode the code stream of the encoding unit;
determining an allocated code length to the multiple channels based on the decoding code length, wherein the allocated code length is used to indicate a code length required to decode residuals of the code stream of the encoding blocks of the multiple channels;
determining a decoding code length allocated to each of the multiple channels based on an average value of the allocated code length across the multiple channels.

24. An image decoding method, comprising:

acquiring a code stream obtained after an encoding unit is encoded;

decoding a substream corresponding to a first channel in a first decoding mode.

25. The method according to claim 24, wherein decoding the substream corresponding to the first channel in the first decoding mode comprises:

directly decoding the substream corresponding to the first channel in the first decoding mode when a first fixed-length code is equal to an image bit width; or
performing inverse quantization on parsed pixel values in an encoding block of the first channel when the first fixed-length code is smaller than the image bit width.

26. An image decoding method, comprising:

acquiring a decoding unit, wherein the decoding unit is an image block in an image to be processed, and the decoding unit comprises decoding blocks of multiple channels;
determining a first total code length, wherein the first total code length is a total code length of a first code stream obtained by decoding of each of the decoding blocks of the multiple channels in a target decoding mode corresponding to the decoding block;
decoding the decoding blocks of the multiple channels in a fallback mode when the first total code length is greater than or equal to a remaining size of a code stream buffer.

27. The method according to claim 26, wherein the method further comprises:
decoding a mode flag from multiple substreams obtained by decoding of the decoding blocks of the multiple channels.

28. An image decoding method, comprising:

parsing a code stream obtained after an encoding unit is encoded and determining processing coefficients corresponding to the encoding unit;
decoding the code stream based on the processing coefficients.

29. The method according to claim 28, wherein the processing coefficients comprise one or more of residual coefficients and transformation coefficients; the processing coefficients comprise multiple groups of processing coefficients; the number of processing coefficients in each group of processing coefficients is less than or equal to a number threshold.

30. An image encoding apparatus, comprising:

an acquiring module, configured for acquiring an encoding unit, wherein the encoding unit comprises encoding blocks of multiple channels;
a processing module, configured for encoding preset codewords in a target substream that meets a preset condition until the target substream no longer meets the preset condition, wherein the target substream is a substream among multiple substreams; the multiple substreams are a code stream obtained by encoding of the encoding blocks of the multiple channels.

31. An image encoding apparatus, comprising:

an acquiring module, configured for acquiring an encoding unit, wherein the encoding unit comprises encoding blocks of multiple channels;
a processing module, configured for encoding an encoding block of each channel based on a preset expansion rate, to cause a current expansion rate to be less than or equal to the preset expansion rate.

32. An image encoding apparatus, comprising:

an acquiring module, configured for acquiring an encoding unit, wherein the encoding unit comprises encoding blocks of multiple channels;
a processing module, configured for encoding an encoding block of at least one channel in the multiple channels in an intra block copy IBC mode; acquiring block vectors BVs of reference prediction blocks, wherein the BVs of the reference prediction blocks are used to indicate positions of the reference prediction blocks in an encoded image block, and the reference prediction blocks are used to characterize a prediction value of the encoding block encoded in the IBC mode; encoding the BVs of the reference prediction blocks in at least one substream obtained by encoding of the encoding block of the at least one channel in the IBC mode.

33. An image encoding apparatus, comprising:

an acquiring module, configured for acquiring an encoding unit, wherein the encoding unit is an image block in an image to be processed; the encoding unit comprises encoding blocks of multiple channels;
a processing module, configured for determining a first total code length, wherein the first total code length is a total code length of a first code stream obtained by encoding of each of the encoding blocks of the multiple channels in a target encoding mode corresponding to the encoding block; the target encoding mode comprises a first encoding mode; the first encoding mode is a mode in which sample values in the encoding block according to a first fixed-length code; a code length of the first fixed-length code is less than or equal to an image bit width of the image to be processed; the image bit width is used to characterize the number of bits required to store each sample in the image to be processed; encoding the encoding blocks of the multiple channels in a fallback mode when the first total code length is greater than or equal to a remaining size of a code stream buffer, wherein a mode flag of the fallback mode is same as that of the first encoding mode.

34. An image decoding apparatus, comprising:
a processing module, configured for parsing a code stream obtained after an encoding unit is encoded, wherein the encoding unit comprises encoding blocks of multiple channels; determining the number of codewords, wherein the number of codewords is used to indicate the number of preset codewords encoded in a target substream that meets a preset condition, and the preset codewords are encoded into the target substream when there is the target substream that meets the preset condition; decoding the code stream based on the number of codewords.

35. An image decoding apparatus, comprising:
a processing module, configured for parsing a code stream obtained after an encoding unit is encoded, wherein the encoding unit comprises encoding blocks of multiple channels; determining a current expansion rate; determining the number of codewords based on the current expansion rate and a first preset expansion rate, wherein the number of codewords is used to indicate the number of preset codewords encoded in a target substream that meets a preset condition, and the preset codewords are encoded into the target substream when there is the target substream that meets the preset condition; decoding the code stream based on the number of codewords.

36. An image decoding apparatus, comprising:

a processing module, configured for parsing a code stream obtained after an encoding unit is encoded, wherein the encoding unit comprises encoding blocks of multiple channels, and the code stream comprises multiple substreams obtained after the encoding blocks of the multiple channels are encoded, and the multiple substreams correspond one-to-one with the multiple channels; determining a position of a reference prediction block from the multiple substreams based on block vectors BVs of the reference prediction blocks parsed from at least one of the multiple substreams, wherein the reference prediction blocks are used to characterize a prediction value of a decoding block decoded in an intra block copy IBC mode, and the BVs of the reference prediction blocks are used to indicate positions of the reference prediction blocks in a reconstructed image block; determining the prediction value of the decoding block decoded in the IBC mode based on information about the positions of the reference prediction blocks;
reconstructing the decoding block decoded in the IBC mode based on the prediction value.

37. An image decoding apparatus, comprising:
a processing module, configured for parsing a code stream obtained after an encoding unit is encoded, wherein the encoding unit comprises encoding blocks of multiple channels; if a mode flag is parsed from substreams obtained by encoding of the encoding blocks of multiple channels and a second total code length is greater than a remaining size of a code stream buffer, then determining that a target decoding mode for the substreams is a fallback mode, wherein the mode flag is used to indicate whether the encoding blocks of the multiple channels are encoded in the fallback mode; the second total code length is a total code length of the code stream obtained by encoding of all of the encoding blocks of the multiple channels in a first encoding mode; the first encoding mode is a mode in which sample values in an encoding block are encoded in a first fixed-length code; a code length of the first fixed-length code is less than or equal to an image bit width of an image to be processed; the image bit width is used to characterize the number of bits required to encode and store each sample in the image to be processed; parsing a preset flag bit in the substreams, and determining a target fallback mode, wherein the target fallback mode is a type of fallback mode, the preset flag bit is used to indicate a type of fallback mode used for encoding the encoding blocks of the multiple channels, the fallback mode comprises a first fallback mode and a second fallback mode; decoding the substreams in the target fallback mode.

38. A video encoder comprising a processor and a memory;

   the memory stores instructions that can be executed by the processor therein;
   the processor is configured to cause the video encoder to carry out the method as claimed in any one of claims 1-14 when executing the instructions.

39. A video decoder comprising a processor and a memory;

   the memory stores instructions that can be executed by the processor therein;
   the processor is configured to cause the video decoder to carry out the method as claimed in any one of claims 15-29 when executing the instructions.

40. A readable storage medium comprising software instructions;
   the software instructions, when running in an image encoding apparatus and an image decoding apparatus, cause the image encoding apparatus to carry out the method as claimed in any one of claims 1-14 and the image decoding apparatus to carry out the method as claimed in any one of claims 15-29.

Fig.1

Fig.2

N

M | N-M

data header | data body

Fig.3

Fig.4

encoding substream
buffer 1

| 1_4 | 1_3 | 1_2 | 1_1 |

block count
queue 1

| 28 | 27 | 13 | 12 |

encoding substream
buffer 2

| 2_2 | 2_1 |

block count
queue 2

| 71 | 5 |

encoding substream
buffer 3

| 3_3 | 3_2 | 3_1 |

block count
queue 3

| 25 | 13 | 6 |

interweaving

packet order after interweaving

| 2_2 | 1_4 | 1_3 | 3_3 | 3_2 | 1_2 | 1_1 | 3_1 | 2_1 |

Fig.5

**10** video encoding and decoding system **11**

source apparatus

video source — 101

video encoder — 102

output interface — 103

storage apparatus — 13

— 12

destination apparatus

display apparatus — 111

video decoder — 112

input interface — 113

Fig.6

— 102

video data → preprocessing module — 20 → original block → + 202 → residual block → transformation module — 22 → quantization module — 23

prediction module — 21

syntax element

transformation coefficient after quantization — 24 → entropy encoding module

25 → encoding substream buffer

26 → substream interweaving module

reference image memory — 29 ← reconstruction block ← + 201 ← residual block after inverse transformation ← inverse transformation module — 28 ← inverse quantization module — 27

code stream

Fig.7

Fig.8

Fig.9

processor 41

processor 45

CPU0

CPU1

CPU0

CPU1

bus 43

memory 42

communication interface 44

Fig.10

S101

an encoder acquires an encoding unit

S102

the encoder encodes an encoding block of the first channel in a first encoding mode

Fig.11

S201

a decoder acquires a code stream obtained after an encoding unit is encoded

S202

the decoder decodes a substream corresponding to the first channel in a first decoding mode

Fig.12

S301

an encoder acquires an encoding unit

S302

the encoder determines a first total code length

S303

the encoder codes the encoding blocks of the multiple channels in a fallback mode when the first total code length is greater than or equal to the remaining size of a code stream buffer

Fig.13

S401

a decoder parses a code stream obtained after an encoding unit is encoded

S402

if a mode flag is parsed from substreams obtained by encoding of the encoding blocks in the multiple channels and a second total code length is greater than the remaining size of a code stream buffer, the decoder determines that a target decoding mode for the substream is the fallback mode

S403

the decoder parses a preset flag bit in the substreams to determine a target fallback mode

S404

the decoder decodes the substreams in the target fallback mode

Fig.14

S501

a decoder parses a code stream obtained after an
encoding unit is encoded

S502

the decoder parses a first flag from a substream obtained
by encoding of an encoding block of a first channel

S503

the decoder parses a second flag from the substream
obtained by encoding of the encoding block of the
first channel

S504

the decoder parses a third flag from the substream obtained
by encoding of the encoding block of the first channel when
the second flag indicates that a target mode used for the
encoding blocks of the multiple channels is the fallback
mode

S505

the decoder determines a target decoding mode for the
multiple channels according to the type of fallback mode
indicated by the third flag, and decodes the substreams
obtained by encoding of the encoding blocks of the multiple
channels in the target decoding mode

Fig.15

S601

the encoder determines a target encoding code length of
the encoding unit based on the remaining size of the code
stream buffer and the target BPP

S602

determining an allocated code length to the multiple
channels based on the target encoding code length

S603

determining an encoding code length allocated to each
of the multiple channels based on an average value of the
allocated code length across the multiple channels

Fig.16

| an encoder acquires an encoding unit | S701 |

↓

| the encoder codes an encoding block of at least one channel in the multiple channels in an IBC mode | S702 |

↓

| the encoder acquires BVs of reference prediction blocks | S703 |

↓

| the encoder codes the BVs of the reference prediction blocks in at least one substream obtained by encoding of the encoding block of the at least one channel in the IBC mode | S704 |

Fig.17

| a decoder parses a code stream obtained after an encoding unit is encoded | S801 |

↓

| the decoder determines position of reference prediction blocks from the multiple substreams based on block vector BVs of the reference prediction blocks parsed from at least one substream in the multiple substreams | S802 |

↓

| the decoder determines a prediction value of a decoding block decoded in the IBC mode based on information about the positions of the reference prediction blocks | S803 |

↓

| the decoder reconstructs the decoding block decoded in the IBC mode based on the prediction value | S804 |

Fig.18

S901

an encoder acquires processing coefficients
corresponding to an encoding unit

S902

the encoder groups the processing coefficients into
multiple groups according to a number threshold

Fig.19

S1001

a decoder parses a code stream obtained after an encoding
unit is encoded, to determine processing coefficients
corresponding to the encoding unit

S1002

the decoder decodes the code stream based on the
processing coefficients

Fig.20

S1101

an encoder acquires an encoding unit

S1102

the encoder acquires complexity information of an
encoding block of each channel in P channels

S1103

the encoder codes complexity information of encoding
blocks of all of the channels in substreams obtained by
encoding of the encoding blocks of the P channels

Fig.21

S1201

an encoder acquires an encoding unit

S1202

the encoder merges substreams obtained by encoding of the
encoding blocks of at least two preset channels in multiple
channels into one merged substream when an image format
of the image to be processed is a preset format

Fig.22

S1301

a decoder parses a code stream obtained after an
encoding unit is encoded

S1302

the decoder determines a merged substream

S1303

the decoder decodes the code stream based on the
merging of at least two substreams to be merged

Fig.23

S1401

an encoder acquires an encoding unit

S1402

the encoder codes preset codewords in a target
substream that meets a preset condition until the target
substream no longer meets the preset condition

Fig.24

S1501

a decoder parses a code stream obtained after an
encoding unit is encoded

S1502

the decoder determines the number of codewords

S1503

the decoder decodes the code stream based on the
number of codewords

Fig.25

S1601

an encoder acquires an encoding unit

S1602

the encoder determines a target encoding mode corresponding to an encoding block of each channel in the encoding blocks of the multiple channels, based on a preset expansion rate

S1603

the encoder codes the encoding block of each channel in the target encoding mode, to cause a current expansion rate is less than or equal to the preset expansion rate

Fig.26

S1701

a decoder parses a code stream obtained after an encoding unit is encoded

S1702

the decoder determines the number of preset codewords based on the code stream

S1703

the decoder decodes the code stream based on the number of preset codewords

Fig.27

image encoding and decoding apparatus

acquiring module 2801

processing module 2802

Fig.28

# EP 4 593 382 A1

## INTERNATIONAL SEARCH REPORT

| International application No. |
| --- |
| **PCT/CN2023/118293** |

| A. | CLASSIFICATION OF SUBJECT MATTER |
| --- | --- |

H04N19/176(2014.01)i

According to International Patent Classification (IPC) or to both national classification and IPC

| B. | FIELDS SEARCHED |
| --- | --- |

Minimum documentation searched (classification system followed by classification symbols)

IPC: H04N19/-

Documentation searched other than minimum documentation to the extent that such documents are included in the fields searched

Electronic data base consulted during the international search (name of data base and, where practicable, search terms used)

CNABS, CNTXT, ENTXTC, VCN, VEN, ENTXT, JPTXT, WOTXT, CNKI, IEEE: 图像, 编码, 解码, 多通道, 子流, 膨胀率, 帧内块复制, 块向量, 码长, 缓冲, 剩余, 定长码, 预设, 码字, 数量, 条件, 残差, 变换系数, image, encod+, decod+, multi-channel, sub-stream, ratio, IBC, BV, length, buffer, remain+, fixed-length code, predetermin+, code, number, condition, residual, transform+, coefficient

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116132685 A (HANGZHOU HIKVISION DIGITAL TECHNOLOGY CO., LTD.) 16 May 2023 (2023-05-16) <br> paragraphs 89-576 | 1-40 |
| X | CN 111327901 A (BEIJING DAJIA INTERCONNECTION INFORMATION TECHNOLOGY CO., LTD.) 23 June 2020 (2020-06-23) <br> description, paragraphs 78-208 | 18-21, 24, 25, 28, 29, 32, 36, 39, 40 |
| A | CN 104159107 A (SHANGHAI AEROSPACE ELECTRONIC COMMUNICATION EQUIPMENT RESEARCH INSTITUTE) 19 November 2014 (2014-11-19) <br> entire document | 1-40 |
| A | US 2011248872 A1 (RESEARCH IN MOTION LIMITED) 13 October 2011 (2011-10-13) <br> entire document | 1-40 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 December 2023** | **02 January 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/118293** |

**Box No. III        Observations where unity of invention is lacking (Continuation of item 3 of first sheet)**

This International Searching Authority found multiple inventions in this international application, as follows:

Independent claims (1, 15, 17, 30, 31, 34, 35, 38, 39, 40) set forth an image encoding/decoding method/apparatus, which relates to encoding a plurality of channels on the basis of an expansion rate, or a preset codeword and a preset condition. Independent claims (6, 18, 32, 36, 38, 39, 40) set forth an image encoding/decoding method/apparatus, which relates to encoding/decoding a plurality of channels on the basis of a block vector of an intra block copy mode. Independent claims (9, 26, 33, 38, 39, 40) set forth an image encoding/decoding method/apparatus, which relates to encoding/decoding a plurality of channels on the basis of a first total code length and a buffer remaining size. Independent claims (22, 37, 39, 40) set forth an image decoding method/apparatus, which relates to decoding a plurality of channels on the basis of a second total code length and a buffer remaining size. Independent claims (24, 39, 40) set forth an image decoding method, which relates to decoding on the basis of a first decoding mode. Independent claims (28, 39, 40) set forth an image decoding method, which relates to decoding on the basis of a processing coefficient.

The same or corresponding technical features between every two of the first set of independent claims (1, 15, 17, 30, 31, 34, 35, 38, 39, 40), the second set of independent claims (6, 18, 32, 36, 38, 39, 40), the third set of independent claims (9, 26, 33, 38, 39, 40), the fourth set of independent claims (22, 37, 39, 40), the fifth set of independent claims (24, 39, 40) and the sixth set of independent claims (28, 39, 40) comprise "an image encoding/decoding method/ apparatus", and/or "an encoding unit comprising encoding blocks of a plurality of channels". However, the above-mentioned technical features are all common general knowledge in the art. Therefore, said claims do not have a same or corresponding special technical feature, and therefore do not fall within the same inventive concept and do not comply with PCT Rule 13.1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

International application No.

**PCT/CN2023/118293**

| Patent document cited in search report | | | Publication date (day/month/year) | Patent family member(s) | | | Publication date (day/month/year) |
|---|---|---|---|---|---|---|---|
| CN | 116132685 | A | 16 May 2023 | None | | | |
| CN | 111327901 | A | 23 June 2020 | CN | 111327901 | B | 30 May 2023 |
| CN | 104159107 | A | 19 November 2014 | CN | 104159107 | B | 29 September 2017 |
| US | 2011248872 | A1 | 13 October 2011 | US | 8174414 | B2 | 08 May 2012 |
| | | | | US | 2012194363 | A1 | 02 August 2012 |
| | | | | US | 8730071 | B2 | 20 May 2014 |

Form PCT/ISA/210 (patent family annex) (July 2022)

**REFERENCES CITED IN THE DESCRIPTION**

**Patent documents cited in the description**

- CN 202211146464